(19) **Europäisches Patentamt** / **European Patent Office** / **Office européen des brevets**

(11) **EP 4 737 983 A1**

(12) **EUROPEAN PATENT APPLICATION**
published in accordance with Art. 153(4) EPC

(43) Date of publication:
06.05.2026 Bulletin 2026/19

(21) Application number: 23943805.4

(22) Date of filing: 27.06.2023

(51) International Patent Classification (IPC):
$G02B\ 27/01^{(2006.01)}$    $G02B\ 27/00^{(2006.01)}$
$G02B\ 3/12^{(2006.01)}$    $B60K\ 35/00^{(2024.01)}$
$G02B\ 3/00^{(2006.01)}$

(52) Cooperative Patent Classification (CPC):
B60K 35/00; G02B 3/00; G02B 3/12; G02B 27/00;
G02B 27/01

(86) International application number:
PCT/KR2023/008894

(87) International publication number:
WO 2025/005312 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: LG Electronics Inc.
Yeongdeungpo-gu
Seoul 07336 (KR)

(72) Inventors:
• KIM, Jinyong
  Seoul 06772 (KR)

• CHOI, Byoungjoon
  Seoul 06772 (KR)
• JUNG, Youngho
  Seoul 06772 (KR)
• KIM, Dongwook
  Seoul 06772 (KR)
• LEE, Seonho
  Seoul 06772 (KR)

(74) Representative: Vossius & Partner
Patentanwälte Rechtsanwälte mbB
Siebertstraße 3
81675 München (DE)

(54) **DISPLAY DEVICE FOR VEHICLE**

(57)    A display apparatus for a vehicle is disclosed. A display apparatus for a vehicle according to an embodiment of the present disclosure includes: a picture generation device including a light output device and configured to output a projection image; an optical path separator configured to reflect a first projection image corresponding to a portion of the projection image from the picture generation device; a screen including one surface on which the first projection image from the optical path separator is projected; and a focus changer disposed between the picture generation device and the optical path separator or between the optical path separator and the screen, and configured to change a focus of the first projection image. Accordingly, it is possible to change the focus of the projection image projected on the screen while implementing a plurality of displays.

**EP 4 737 983 A1**

**EP 4 737 983 A1**

# FIG. 1

2

## Description

## BACKGROUND

### 1. Field

The present disclosure relates to a display apparatus for a vehicle, and more particularly, to a display apparatus for a vehicle capable of varying a focus of a projection image projected onto a screen while implementing a plurality of displays in an integrated manner.

### 2. Description of the Related Art

A vehicle is a machine that allows a user who rides therein to move in a desired direction. A representative example of the vehicle is a car.

Meanwhile, for convenience of vehicle users, some vehicles are equipped with a display apparatus or device.

For example, a display is positioned on an instrument cluster to present various types of information. In addition to the cluster display, in order to display vehicle driving information or the like, various displays, such as an AVN (Audio Video Navigation) display and a head-up display that outputs a projection image onto a windshield, are increasingly being mounted in vehicles.

As various displays are disposed in a vehicle, methods for operating the displays in an integrated manner have been studied.

Meanwhile, Japanese Laid-open Patent Publication No. 11-59224 (hereinafter referred to as "Prior Art Document 1"), which is hereby incorporated by reference, discloses a front window display device that adjusts the brightness of a head-up display (HUD) of the window display device based on data of an illuminance sensor.

However, in Prior Art Document 1, only the window display device is disclosed, and thus it has a limitation in that integrated operation of various displays is difficult.

Meanwhile, U.S. Patent Publication No. US10298890 (hereinafter referred to as "Prior Art Document 2"), which is hereby incorporated by reference, discloses a vehicle display device that projects an image using a cluster display.

However, in Prior Art Document 2, only the cluster display is disclosed, and thus it has a limitation in that integrated operation of various displays is difficult.

## SUMMARY

It is an object of the present disclosure to provide a display apparatus for a vehicle capable of varying a focus of a projection image projected onto a screen while implementing a plurality of displays in an integrated manner.

It is another object of the present disclosure to provide a display apparatus for a vehicle capable of changing a position or a shape of a screen while implementing a plurality of displays in an integrated manner.

In accordance with an aspect of the present disclosure, the above and other objects can be accomplished by providing a display apparatus for a vehicle including: a picture generation device including a light output device and configured to output a projection image; an optical path separator configured to reflect a first projection image corresponding to a portion of the projection image from the picture generation device; a screen including one surface on which the first projection image from the optical path separator is projected; and a focus changer disposed between the picture generation device and the optical path separator or between the optical path separator and the screen, and configured to change a focus of the first projection image.

The focus changer can include at least one of a concave lens or a convex lens.

The display apparatus can further include a signal processing device configured to control the focus changer. The focus changer can include a liquid lens of which focus is changed in response to an electrical signal.

The display apparatus can further include a diffuser disposed between the picture generation device and a windshield, and configured to diffuse a second projection image corresponding to another portion of the projection image.

The display apparatus can further include a diffuser disposed between the picture generation device and a windshield, and configured to diffuse a second projection image corresponding to another portion of the projection image; and a second focus changer disposed between the picture generation device and the diffuser and configured to change a focus of the second projection image.

The second focus changer can include at least one of a concave lens or a convex lens.

The display apparatus can further include a signal processing device configured to control the second focus changer. The second focus changer can include a liquid lens of which focus is changed in response to an electrical signal.

When a distance between the picture generation device and the focus changer is a first distance, a distance between the optical path separator and the screen can be set to a second distance. In response to the distance between the picture generation device and the focus changer being a third distance less than the first distance, the distance between the optical path separator and the screen can be set to a fourth distance less than the second distance.

The display apparatus can further include a sensor disposed between the optical path separator and the screen and configured to sense the second projection image; and a signal processing device configured to control the focus changer based on a signal sensed by the sensor.

The display apparatus can further include a position changer configured to change a position of the screen based on a control signal of the signal processing device.

The display apparatus can further include a camera disposed inside the vehicle; and a shape changer configured to change a shape of the screen based on a control signal from the signal processing device, the control signal being generated based on a camera image from the camera.

The signal processing device can be configured to: control a focus of the first projection image to be a first distance in a first mode; and control the focus of the first projection image to be a second distance in a second mode.

The light output device can include a light source; and a liquid crystal panel configured to output the first projection image and the second projection image based on light output from the light source.

In accordance with another aspect of the present disclosure, there is provided a display apparatus for a vehicle including: a picture generation device including a light output device and configured to output a projection image; an optical path separator configured to reflect a first projection image corresponding to a portion of the projection image from the picture generation device; a diffuser disposed between the picture generation device, and a windshield and configured to diffuse a second projection image corresponding to another portion of the projection image; a focus changer disposed between the picture generation device and the diffuser, and configured to change a focus of the second projection image; and a screen including one surface on which the first projection image from the optical path separator is projected.

The focus changer can include at least one of a concave lens or a convex lens.

The display apparatus can further include a signal processing device configured to control the focus changer. The focus changer can include a liquid lens of which focus is changed in response to an electrical signal.

## EFFECTS OF THE DISCLOSURE

A display apparatus for a vehicle according to an embodiment of the present disclosure includes: a picture generation device including a light output device and configured to output a projection image; an optical path separator configured to reflect a first projection image corresponding to a portion of the projection image from the picture generation device; a screen including one surface on which the first projection image from the optical path separator is projected; and a focus changer disposed between the picture generation device and the optical path separator or between the optical path separator and the screen, and configured to change a focus of the first projection image. Accordingly, it is possible to change the focus of the projection image projected on the screen while implementing a plurality of displays in an integrated manner.

The focus changer can include at least one of a concave lens or a convex lens. Accordingly, it is possible to change the focus of the projection image projected on the screen while implementing a plurality of displays in an integrated manner.

The display apparatus for a vehicle can further include a signal processing device configured to control the focus changer. The focus changer can include a liquid lens of which focus is changed in response to an electrical signal. Accordingly, it is possible to change the focus of the projection image projected on the screen while implementing a plurality of displays in an integrated manner.

The display apparatus for a vehicle can further include a diffuser disposed between the picture generation device and a windshield, and configured to diffuse a second projection image corresponding to another portion of the projection image. Accordingly, it is possible to improve clarity or sharpness of the second projection image.

The display apparatus for a vehicle can further include a diffuser disposed between the picture generation device and a windshield, and configured to diffuse a second projection image corresponding to another portion of the projection image; and a second focus changer disposed between the picture generation device and the diffuser and configured to change a focus of the second projection image. Accordingly, it is possible to change the focus of the second projection image while implementing a plurality of displays in an integrated manner.

The second focus changer can include at least one of a concave lens or a convex lens. Accordingly, it is possible to change the focus of the second projection image while implementing a plurality of displays in an integrated manner.

The display apparatus for a vehicle can further include a signal processing device configured to control the second focus changer. The second focus changer can include a liquid lens of which focus is changed in response to an electrical signal. Accordingly, it is possible to change the focus of the second projection image while implementing a plurality of displays in an integrated manner.

When a distance between the picture generation device and the focus changer is a first distance, a distance between the optical path separator and the screen can be set to a second distance. In response to the distance between the picture generation device and the focus changer being a third distance less than the first distance, the distance between the optical path separator and the screen can be set to a fourth distance less than the second distance. Accordingly, it is possible to achieve a compact vehicle display while implementing a plurality of displays in an integrated manner.

The display apparatus for a vehicle can further include a sensor disposed between the optical path separator and the screen and configured to sense the second projection image; and a signal processing device configured to control the focus changer based on a signal sensed by the sensor. Accordingly, it is possible to change a focus of a projection image while implementing a plurality of displays in an integrated manner.

The display apparatus for a vehicle can further include a position changer configured to change a position of the screen based on a control signal of the signal processing device. Accordingly, it is possible to change the position of the screen while implementing a plurality of displays in an integrated manner.

The display apparatus for a vehicle can further include a camera disposed inside the vehicle; and a shape changer configured to change a shape of the screen based on a control signal from the signal processing device, the control signal being generated based on a camera image from the camera. Accordingly, it is possible to change the shape of the screen while implementing a plurality of displays in an integrated manner.

The signal processing device can be configured to: control a focus of the first projection image to be a first distance in a first mode; and control the focus of the first projection image to be a second distance in a second mode. Accordingly, it is possible to change a focus of a projection image according to the mode while implementing a plurality of displays in an integrated manner.

The light output device can include a light source; and a liquid crystal panel configured to output the first projection image and the second projection image based on light output from the light source. Accordingly, it is possible to change a focus of a projection image while implementing a plurality of displays in an integrated manner.

A display apparatus for a vehicle according to another embodiment of the present disclosure includes: a picture generation device including a light output device and configured to output a projection image; an optical path separator configured to reflect a first projection image corresponding to a portion of the projection image from the picture generation device; a diffuser disposed between the picture generation device, and a windshield and configured to diffuse a second projection image corresponding to another portion of the projection image; a focus changer disposed between the picture generation device and the diffuser, and configured to change a focus of the second projection image; and a screen including one surface on which the first projection image from the optical path separator is projected. Accordingly, it is possible to change the focus of the second projection image while implementing a plurality of displays in an integrated manner.

The focus changer can include at least one of a concave lens or a convex lens. Accordingly, it is possible to change the focus of the second projection image while implementing a plurality of displays in an integrated manner.

The display apparatus for a vehicle can further include a signal processing device configured to control the focus changer. The focus changer can include a liquid lens of which focus is changed in response to an electrical signal. Accordingly, it is possible to change the focus of the second projection image while implementing a plurality of displays in an integrated manner.

## BRIEF DESCRIPTION OF THE DRAWINGS

FIG. 1 illustrates an example of the exterior and interior of a vehicle.

FIG. 2 illustrates an outer appearance of a display apparatus for a vehicle according to an embodiment of the present disclosure.

FIG. 3 illustrates an example of an internal block diagram of the display apparatus for a vehicle of FIG. 2.

FIG. 4A illustrates an internal configuration of a display apparatus for a vehicle according to an embodiment of the present disclosure.

FIGS. 4B to 4D illustrate internal configurations of a display apparatus for a vehicle according to various embodiments of the present disclosure.

FIGS. 4E to 4F are diagrams for explaining an operation of the display apparatus for a vehicle of FIG. 4C.

FIGS. 4G to 4H are diagrams for explaining the operation of the display apparatus for a vehicle of FIGS. 4A to 4D.

FIGS. 5A and 5B illustrate various examples of an internal block diagram of the display apparatus for a vehicle of FIG. 4A or FIG. 4B.

FIG. 5C illustrates an example of an internal block diagram of the display apparatus for a vehicle of FIG. 4C.

FIGS. 6A to 6B illustrate various examples of an internal block diagram of the display apparatus for a vehicle of FIG. 5B.

FIG. 8 is a flowchart illustrating an example of an operation of a display apparatus for a vehicle according to an embodiment of the present disclosure.

FIGS. 9A to 10C are diagrams referred to in the description of FIG. 8.

FIG. 11 illustrates another example of an internal block diagram of the display apparatus for a vehicle of FIGS. 4A to 4B.

FIG. 12 illustrates another example of an internal block diagram of the display apparatus for a vehicle of FIGS. 4A to 4B.

FIGS. 13A to 13D are diagrams referred to in the description of FIG. 12.

## DETAILED DESCRIPTION OF THE PREFERRED EMBODIMENTS

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

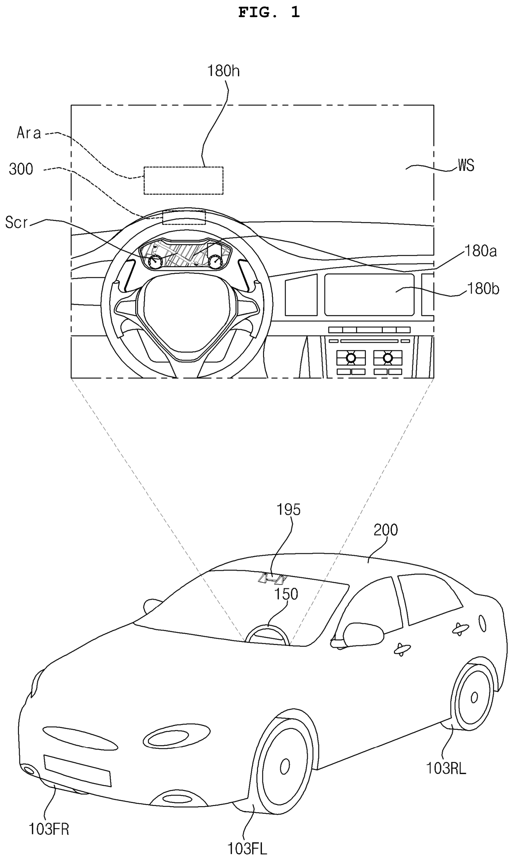

FIG. 1 illustrates an example of the exterior and interior of a vehicle.

Referring to FIG.1, a vehicle 200 can include a plurality of wheels 103FR, 103FL, 103RL, ... rotated by a power source and a steering wheel 150 for adjusting a traveling direction of the vehicle 200.

The vehicle 200 can further include a camera 195 for acquiring an image of the front of the vehicle.

Meanwhile, the vehicle 200 can be provided therein with a plurality of displays 180a, 180b, and 180h for displaying images, information, and the like.

For example, among the plurality of displays 180a, 180b, and 180h, a first display 180a can be a cluster display, a second display 180b can be an AVN (Audio Video Navigation) display, and a third display 180h can be a head-up display (HUD) configured to project an image onto a predetermined area Ara of a windshield WS.

Meanwhile, in the present disclosure, the first display 180a and the third display 180h among the plurality of displays 180a, 180b, and 180h are integrated and implemented as a single apparatus.

To this end, a display apparatus 100 for a vehicle (or simply referred to as "vehicle display apparatus") according to an embodiment of the present disclosure includes a picture generation device 300.

That is, the vehicle display apparatus 100 according to an embodiment of the present disclosure outputs a plurality of projection images using a single light output device 400, separates optical paths of the plurality of projection images, and projects a first projection image, through a first optical path, onto a screen Scr to thereby display cluster information and projects a second projection image, through a second optical path, onto a windshield WS to thereby display vehicle driving information. Accordingly, it is possible to implement a plurality of displays in an integrated manner.

Meanwhile, the vehicle 200 described herein can be a concept including all of an internal combustion engine vehicle having an engine as a power source, a hybrid vehicle having an engine and an electric motor as power sources, and an electric vehicle having an electric motor as a power source.

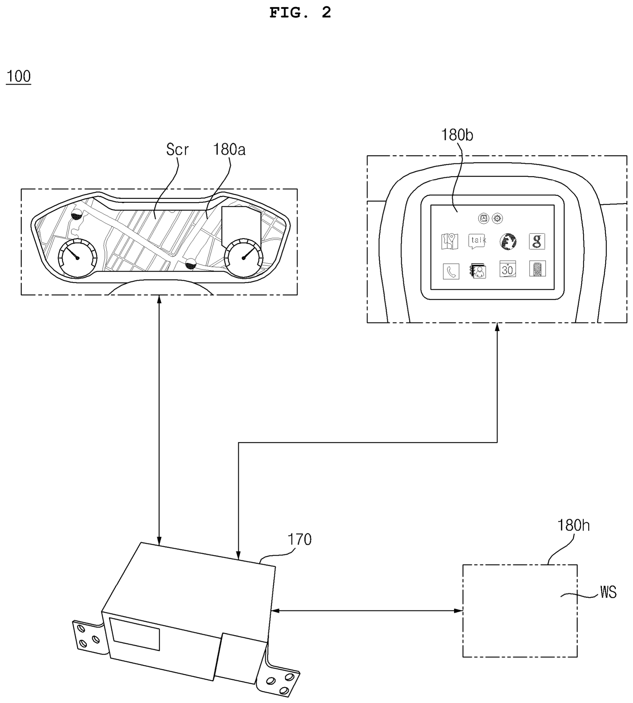

FIG. 2 illustrates an outer appearance of a display apparatus for a vehicle according to an embodiment of the present disclosure.

The vehicle display apparatus 100 according to an embodiment of the present disclosure can include a signal processing device 170 configured to perform signal processing to display an image and information on at least one of the plurality of displays 180a, 180b, and 180h.

As for the plurality of displays 180a, 180b, and 180h, the first display 180a can be a cluster display 180a for displaying a driving state and operation information, the second display 180b can be an AVN (Audio Video Navigation) display for displaying vehicle operation information, a navigation map, various types of entertainment information, or an image, and the third display 180h can be a HUD display 180h for displaying vehicle driving information.

The signal processing device 170 can be provided therein with a memory 508 and a processor 175 to control at least one of the plurality of displays 180a, 180b, and 180h.

Meanwhile, the signal processing device 170 can execute first to third virtual machines (not shown) on a hypervisor 505 in the processor 175.

The first virtual machine (not shown), which is a server virtual machine, can control the second virtual machine (not shown) and the third virtual machine (not shown), which are guest virtual machines.

Meanwhile, the second virtual machine can be referred to as a first guest virtual machine, and the third virtual machine can be referred to as a second guest virtual machine.

The first guest virtual machine (not shown) can be operated for the first display 180a, and the second guest virtual machine (not shown) can be operated for the second display 180b or the third display 180h.

Meanwhile, the server virtualization machine (not shown) in the processor 175 can be configured to set the memory 508 based on the hypervisor 505 for transmission of the same data to the first guest virtualization machine (not shown) and the second guest virtualization machine (not shown). Accordingly, the first display 180a and the second display 180b in the vehicle can display the same information or the same image in a synchronized manner.

Meanwhile, the server virtualization machine (not shown) in the processor 175 can receive and process wheel speed sensor data of the vehicle, and can transmit the processed wheel speed sensor data to at least one of the first guest virtualization machine (not shown) and the second guest virtualization machine (not shown). Accordingly, at least one virtual machine can share the wheel speed sensor data of the vehicle.

Thus, by using the single signal processing device 170, it is possible to control the plurality of displays 180a, 180b, and 180h.

Meanwhile, some of the plurality of displays 180a, 180b, and 180h can operate under a Linux-based operating system (OS), and others can operate under a Web-based operating system (OS).

In some embodiments, the signal processing device 170 can control the plurality of displays 180a, 180b, and 180h operating under different operating systems (OS) to display the same information or the same image in a synchronized manner.

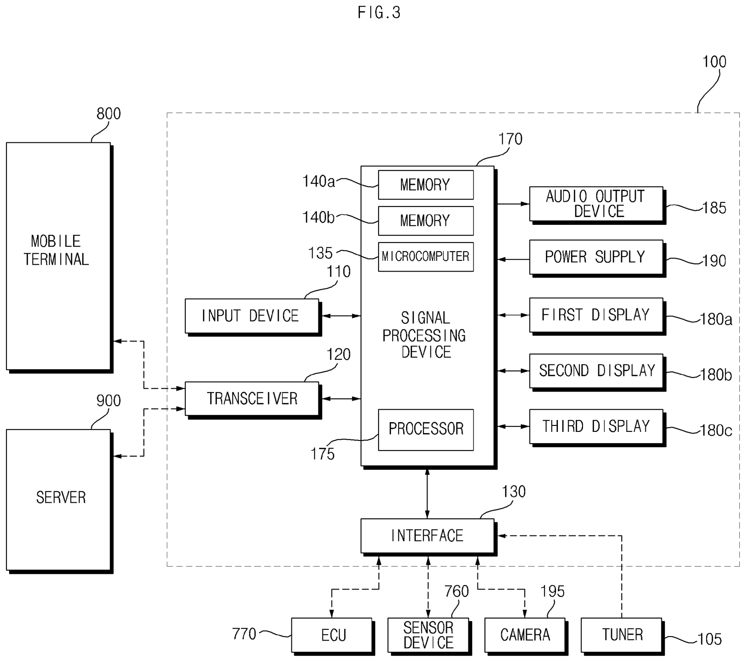

FIG. 3 illustrates an example of an internal block diagram of a display apparatus for a vehicle according to an embodiment of the present disclosure.

Referring to FIG. 3, the vehicle display apparatus 100 according to an embodiment of the present disclosure can include an input device 110, a transceiver 120, an interface 130, a memory 140, a signal processing device 170, a plurality of displays 180a, 180b, and 180h, an audio output device 185, and a power supply 190.

The input device 110 can include a physical button, a pad, and the like for button input, touch input, and the like.

Meanwhile, the input device 110 can include a microphone (not shown) for user voice input.

The transceiver 120 can wirelessly exchange data with a mobile terminal 800 or a server (not shown).

In particular, the transceiver 120 can wirelessly exchange data with a mobile terminal of a vehicle driver. Any of various data communication schemes, such as Bluetooth, Wi-Fi, Wi-Fi Direct, and APIX, can be used as a wireless data communication scheme.

The transceiver 120 can receive weather information and road traffic condition information, e.g., transport protocol expert group (TPEG) information, from the mobile terminal 800 or the server (not shown) . To this end, the transceiver 120 can include a mobile communication module (not shown).

The interface 130 can receive sensor information from an electronic control unit (ECU) 770 or a sensor device 760, and can transmit the received information to the signal processing device 170.

Here, the sensor information can include at least one of vehicle heading information, vehicle location information (global positioning system (GPS) information), vehicle angle information, vehicle speed information, vehicle acceleration information, vehicle tilt information, vehicle forward/backward movement information, battery information, fuel information, tire information, vehicle lamp information, in-vehicle temperature information, and in-vehicle humidity information.

The sensor information can be acquired from a heading sensor, a yaw sensor, a gyro sensor, a position module, a vehicle forward/backward movement sensor, a wheel sensor, a vehicle speed sensor, a vehicle body tilt sensor, a battery sensor, a fuel sensor, a tire sensor, a steering wheel rotation sensor, an in-vehicle temperature sensor, an in-vehicle humidity sensor, etc. The position module can include a GPS module for receiving GPS information.

Meanwhile, the interface 130 can receive front-of-vehicle image data, side-of-vehicle image data, rear-of-vehicle image data, and obstacle-around-vehicle distance information from a camera 195, a LiDAR (not shown), or the like, and can transmit the received information to the signal processing device 170.

The memory 140 can store various data necessary for the overall operation of the vehicle display apparatus 100, such as programs for processing or control of the signal processing device 170.

For example, the memory 140 can store data regarding a hypervisor, a server virtual machine (not shown), and a plurality of guest virtual machines to execute within the processor 175.

The audio output device 185 can convert an electrical signal from the signal processing device 170 into an audio signal and output the audio signal. To this end, the audio output device 185 can include a speaker or the like.

Under the control of the signal processing device 170, the power supply 190 can supply power required for the operation of each component. In particular, the power supply 190 can receive power from a battery in the vehicle.

The third display 180h, which is a HUD display, can include a picture generation device 300 (see FIG. 1) to project an image, and can output an augmented reality-based object under the control of the signal processing device 170.

For example, the HUD display 180h can output vehicle speed information, vehicle traveling direction information, a forward-vehicle object, a distance indicator showing a distance to a vehicle ahead, and the like.

In another example, the HUD display 180h can output an augmented reality lane carpet, an augmented reality route carpet, or an augmented reality dynamic carpet corresponding to a road image.

The signal processing device 170 can control the plurality of displays 180a, 180b, and 180h.

The signal processing device 170 can control the overall operation of each unit or device in the vehicle display apparatus 100.

For example, the signal processing device 170 can include a memory 508 and a processor 175 configured to perform signal processing for the vehicle displays 180a and 180b.

The processor 175 can execute the hypervisor (not shown), and can execute the server virtual machine (not shown) and the plurality of guest virtual machines (not shown) on the executed hypervisor.

Here, the first guest virtual machine (not shown) can be operated for the first display 180a, and the second guest virtual machine (not shown) can be operated for the second display 180b or the third display 180h.

Meanwhile, the signal processing device 170 can process various signals, such as an audio signal, a video (or image) signal, and a data signal. To this end, the signal processing device 170 can be implemented in the form of a system on chip (SOC).

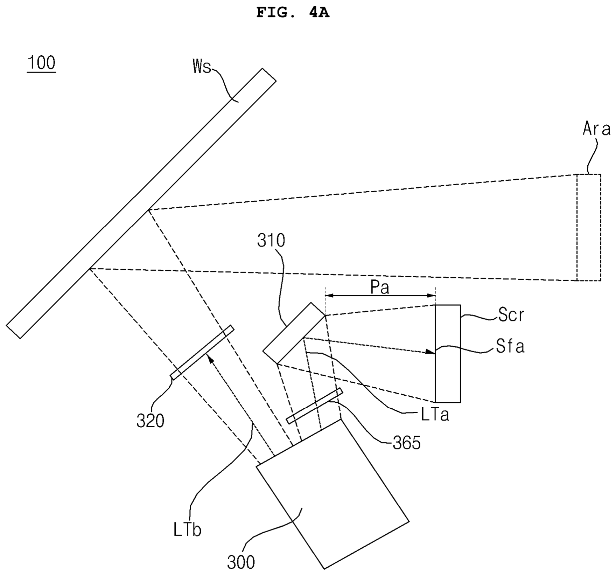

FIG. 4A illustrates an internal configuration of a display apparatus for a vehicle according to an embodiment of the present disclosure.

Referring to FIG. 4A, the vehicle display apparatus 100 according to an embodiment of the present disclosure includes a picture generation device 300 that outputs a projection image, an optical path separator 310 that reflects a first projection image LTa, which is a portion of the projection image from the picture generation device 300, a screen Scr that has one surface onto which the first projection image LTa from the optical path separator 310 is projected, a focus changer 365 that is disposed between the picture generation device 300 and the optical path separator 310 or between the picture generation device 300 and the screen Scr to change a focus of the first projection image LTa.

Accordingly, it is possible to change the focus of the first projection image LTa projected on the screen Scr while implementing a plurality of displays in an integrated manner.

In FIG. 4A, the focus changer 365 is illustrated as being disposed between the picture generation device 300 and the optical path separator 310.

Meanwhile, the focus changer 365 can include at least one of a concave lens or a convex lens.

For example, the focus changer 365 can include a concave lens, thereby increasing a focal length.

In another example, the focus changer 365 can include a convex lens, thereby decreasing a focal length.

In another example, the focus changer 365 can include a lens array having at least one concave lens and at least one convex lens.

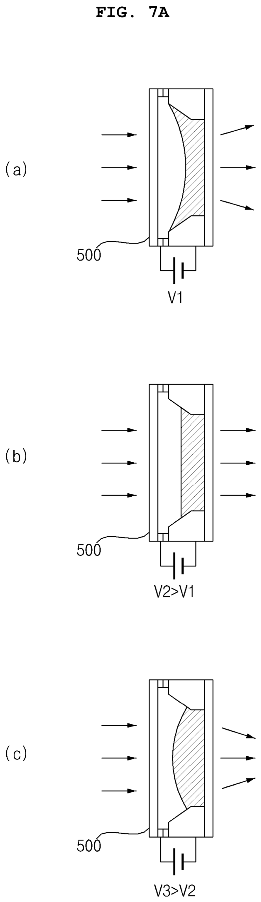

Meanwhile, the focus changer 365 can include a liquid lens 500 (see FIG. 7A) of which focus is changed in response to an electric signal. Accordingly, it is possible to change the focus of the first projection image LTa projected on the screen Scr while implementing the plurality of displays 180a and 180h in an integrated manner.

Meanwhile, the focus changer 365 can include an electrochromic material, a liquid crystal material, or suspended particles configured to change a focus based on an electrical signal of a signal processing device 170.

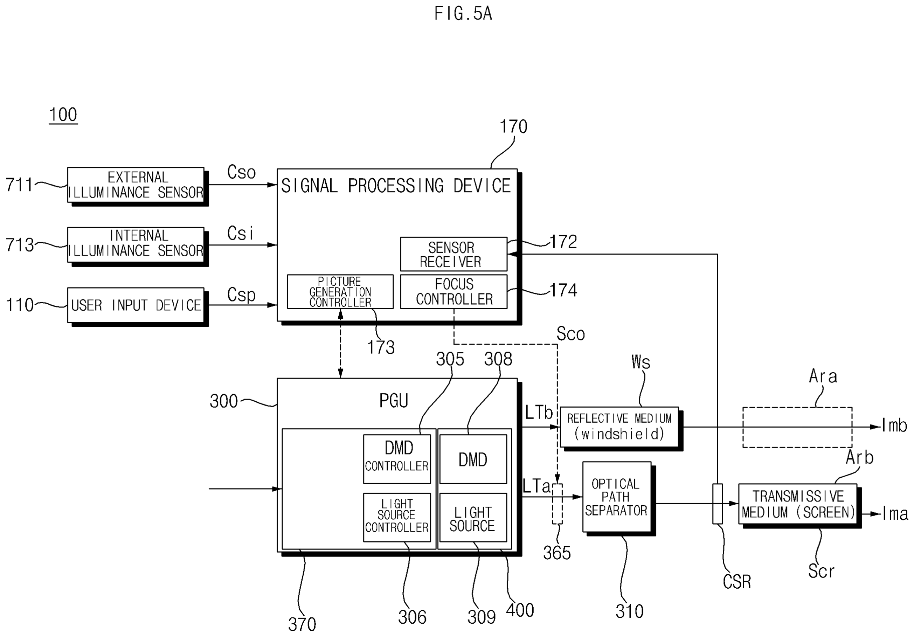

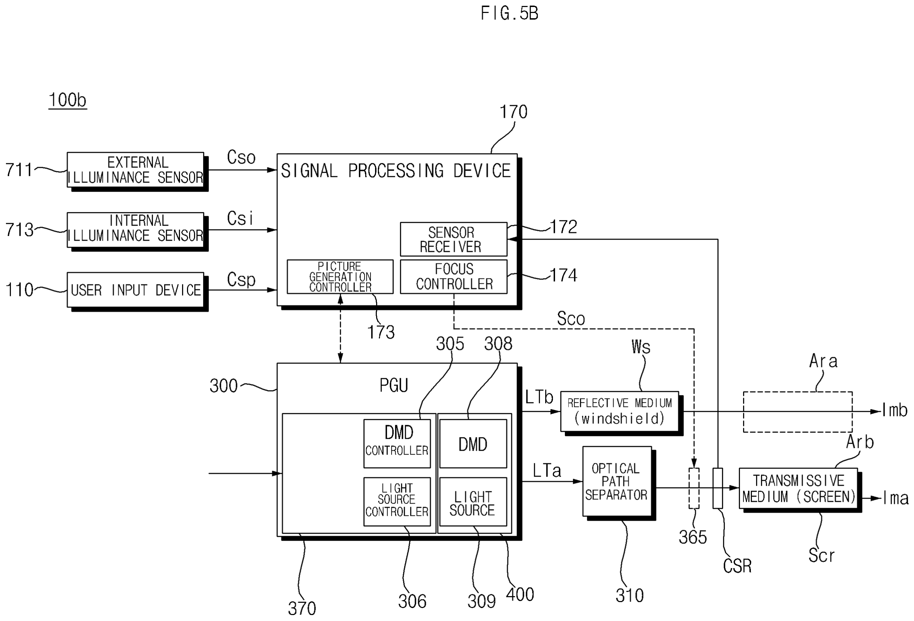

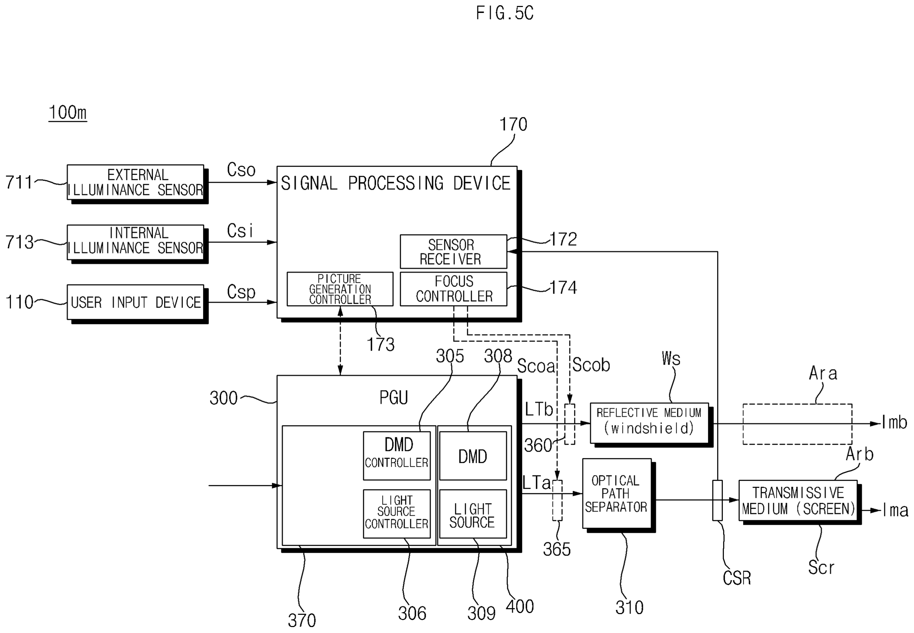

The vehicle display apparatus 100 according to an embodiment of the present disclosure can include the signal processing device 170 (see FIG. 5) that controls the focus changer 365.

For example, the signal processing device 170 (see FIG. 5) can output an electrical signal to thereby control the focus changer 365.

Meanwhile, the first projection image LTa that has passed through the focus changer 365 is projected onto one surface Sfa of the screen Scr, thereby implementing a cluster display.

Meanwhile, the picture generation device 300 outputs a second projection image LTb, which is another portion of the projection image, to a windshield WS.

The second projection image LTb reflected from the windshield WS is output to an area Ara corresponding to a driver's line of sight. Accordingly, it is possible to implement a HUD display based on the second projection image LTb.

The vehicle display apparatus 100 according to an embodiment of the present disclosure can further include a diffuser 320 that is disposed between the picture generation device 300 and the windshield WS to diffuse the second projection image LTb, which is another portion of the projection image.

This allows the second projection image LTb to be diffused and output to the windshield WS.

Meanwhile, the diffuser 320 and the screen Scr can each be made of a light-transmitting material.

In this case, it is preferable that a light transmittance of the diffuser 320 is greater than a light transmittance of the screen Scr. Accordingly, the second projection image LTb can be diffused and output to the windshield WS.

For example, when a projection image is output from the picture generation device 300, a first projection image LTa, which is a portion of the projection image, passes through a first optical path such as the optical path separator 310 and the screen Scr, and a second projection image LTb, which is another portion of the projection image, passes through a second optical path such as being reflected from the windshield WS.

Meanwhile, a focal length of the first projection image LTa output from the picture generation device 300 can correspond to a distance from the picture generation device 300 to the screen Scr, and a focal length of the second projection image LTb output from the picture generation device 300 can correspond to a distance from the picture generation device 300 to the diffuser 320.

As the first projection image LTa and the second projection image LTb are output through different optical paths in a single display apparatus 100, the focal lengths of the first projection image LTa and the second projection image LTb can be different.

Therefore, in the present disclosure, the focus changer 365 that varies a focus of the first projection image LTa is disposed to change the focal length of the first projection image LTa.

In particular, according to an embodiment of the present disclosure, the signal processing device 170 controls the focal length of the first projection image LTa to correspond to the focal length of the second projection image LTb. Accordingly, it is possible to adjust the focus of the projection image projected on the screen Scr while implementing a plurality of displays in an in-

Meanwhile, according to an embodiment of the present disclosure, of the first projection image LTa and the second projection image LTb, the signal processing device 170 can control the focal length of the first projection image LTa to be suitable for a user's line of sight in a first mode in which focusing of the first projection image LTa is required.

That is, in the first mode, the signal processing device 170 can control the focal length of the first projection image LTa to be a first distance.

According to an embodiment of the present disclosure, of the first projection image LTa and the second projection image LTb, the signal processing device 170 can control the focal length of the first projection image LTa to be unsuitable for the user's line of sight in a second mode in which focusing of the first projection image LTa is not required.

That is, in the second mode, the signal processing device 170 can control the focal length of the first projection image LTa to be a second distance that is different from the first distance. Here, the second distance can be greater or smaller than the first distance.

Accordingly, the focus of the projection image projected on the screen Scr can be adjusted depending on whether focusing of the first projection image LTa is required.

As shown in FIG. 4A, by using the projection image output from the single picture generation device 300, it is possible to implement the plurality of displays 180a and 180h in an integrated manner, thereby enabling implementation of a compact vehicle display 100.

Meanwhile, unlike that shown in FIG. 4A, the optical path separator 310 can reflect the first projection image LTa, which is a portion of the projection image from the picture generation device 300, and can transmit the second projection image LTb, which is another portion of the projection image.

To this end, the optical path separator 310 can include a polarizing beam splitter.

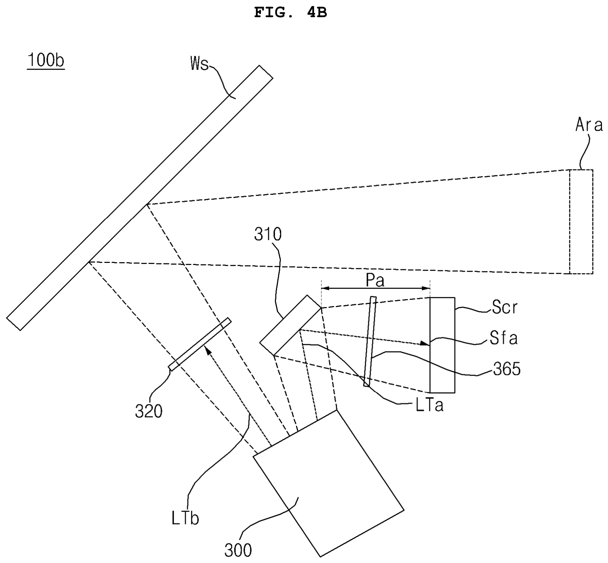

FIGS. 4B to 4D illustrate internal configurations of a display apparatus for a vehicle according to various embodiments of the present disclosure.

FIG. 4B illustrates an internal configuration of a display apparatus for a vehicle according to another embodiment of the present disclosure.

Referring to FIG. 4B, a display apparatus 100b for a vehicle (or simply "vehicle display apparatus") according to another embodiment of the present disclosure is similar to the vehicle display apparatus 100 of FIG. 4A, except that the focus changer 365 is disposed between the optical path separator 310 and the screen Scr, rather than between the picture generation device 300 and the optical path separator 310.

The vehicle display apparatus 100b according to another embodiment of the present disclosure includes a picture generation device 300 that includes a light output device 400 and outputs a projection image, an optical path separator 310 that reflects a first projection image LTa, which is a portion of the projection image from the picture generation device 300, a screen Scr that has one surface onto which the first projection image LTa from the optical path separator 310 is projected, and a focus changer 365 that is disposed between the optical path separator 310 and the screen Scr to change a focus of the first projection image LTa. Accordingly, it is possible to change the focus of the projection image projected on the screen Scr while implementing a plurality of displays in an integrated manner.

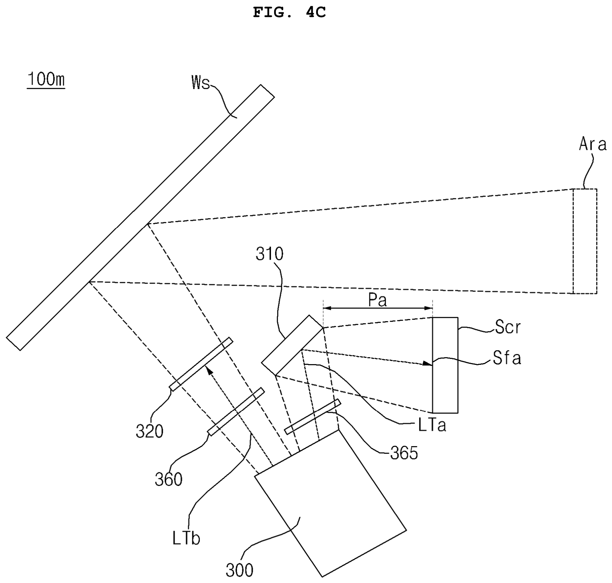

FIG. 4C illustrates an internal configuration of a display apparatus for a vehicle according to another embodiment of the present disclosure.

Referring to FIG. 4C, a display apparatus 100m for a vehicle (or simply "vehicle display apparatus") according to another embodiment of the present disclosure is similar to the vehicle display apparatus 100 of FIG. 4A, except that it further includes a second focus changer 360 that is disposed between the picture generation device 300 and the diffuser 320 to change a focus of the second projection image LTb.

That is, the vehicle display apparatus 100m according to another embodiment of the present disclosure includes a picture generation device 300 that includes a light output device 400 and outputs a projection image, an optical path separator 310 that reflects a first projection image LTa, which is a portion of the projection image from the picture generation device 300, a screen Scr that has one surface onto which the first projection image LTa from the optical path separator 310 is projected, a focus changer 365 that is disposed between the picture generation device 300 and the optical path separator 310 to change a focus of the first projection image LTa, a diffuser 320 that is disposed between the picture generation device 300 and a windshield WS to diffuse a second projection image LTb, which is another portion of the projection image, and a second focus changer 360 that is disposed between the picture generation device 300 and the diffuser 320 to change a focus of the second projection image LTb.

Accordingly, it is possible to change the focus of both the first projection image LTa and the second projection image LTb while implementing a plurality of displays in an integrated manner.

Meanwhile, the second focus changer 360 can include at least one of a concave lens or a convex lens.

Meanwhile, the second focus changer 360 can include a liquid lens 500 of which focus is changed in response to an electric signal.

The vehicle display apparatus 100m according to another embodiment of the present disclosure can further include a signal processing device 170 that controls the second focus changer 360.

As shown in FIG. 4C, by using the projection image output from the single picture generation device 300, it is possible to implement the plurality of displays 180a and 180h in an integrated manner, thereby enabling implementation of a compact vehicle display 100m.

Meanwhile, unlike that shown in FIG. 4C, the optical path separator 310 can reflect the first projection image LTa, which is a portion of the projection image from the picture generation device 300, and can transmit the second projection image LTb, which is another portion of the projection image.

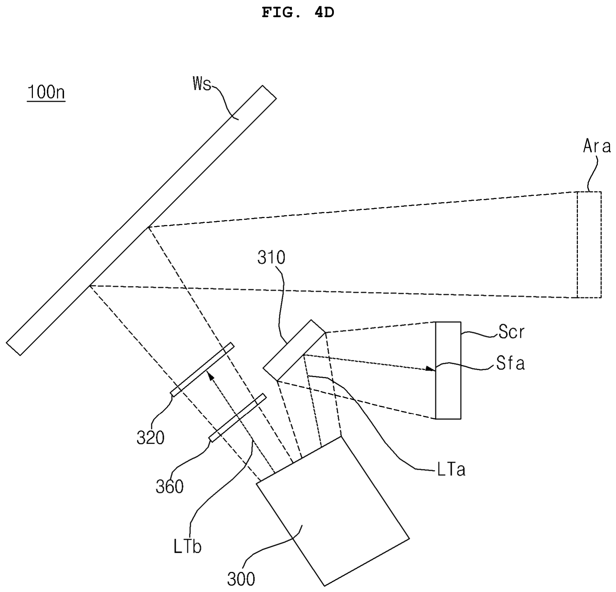

FIG. 4D illustrates an internal configuration of a display apparatus for a vehicle according to another embodiment of the present disclosure.

Referring to FIG. 4D, a display apparatus 100n for a vehicle (or simply "vehicle display apparatus") according to another embodiment of the present disclosure is similar to the vehicle display apparatus 100 of FIG. 4A, except that the focus changer 360 varies a focus of the second projection image LTb.

That is, the vehicle display apparatus 100n according to another embodiment of the present disclosure includes a picture generation device 300 that includes a light output device 400 and outputs a projection image, an optical path separator 310 that reflects a first projection image LTa, which is a portion of the projection image from the picture generation device 300, a diffuser 320 that is disposed between the picture generation device 300 and a windshield WS to diffuse a second projection image LTb, which is another portion of the projection image, a focus changer 360 that is disposed between the picture generation device 300 and the diffuser 320 to change a focus of the second projection image LTb, and a screen Scr that has one surface onto which the first projection image LTa from the optical path separator 310 is projected. Accordingly, it is possible to change the focus of the second projection image LTb while implementing a plurality of displays in an integrated manner.

Meanwhile, the focus changer 360 can include at least one of a concave lens or a convex lens. Accordingly, it is possible to change the focus of the second projection image LTb while implementing a plurality of displays in an integrated manner.

Meanwhile, the focus changer 360 can include a liquid lens 500 of which focus is changed in response to an electric signal.

Meanwhile, the vehicle display apparatus 100n according to another embodiment of the present disclosure can further include a signal processing device 170 that controls the focus changer 365. Accordingly, it is possible to change the focus of the second projection image LTb while implementing a plurality of displays in an integrated manner.

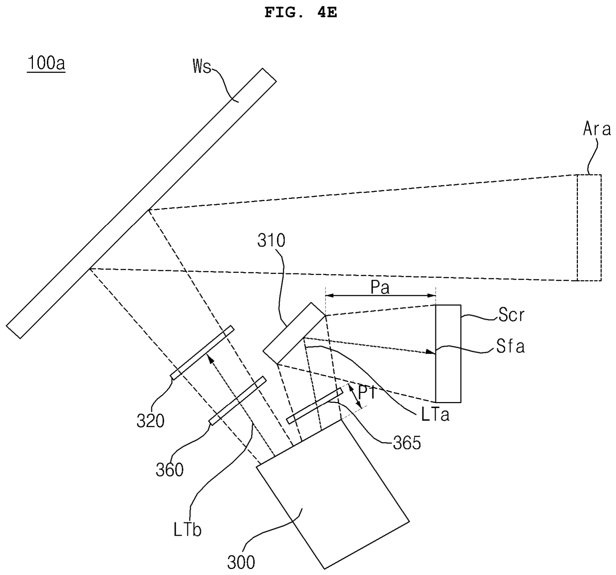

FIGS. 4E to 4F are diagrams for explaining an operation of the vehicle display apparatus of FIG. 4C.

FIG. 4E illustrates an example in which, when a distance between the picture generation device 300 and the focus changer 365 in a vehicle display apparatus 100a is a first distance P1, a distance between the optical path separator 310 and the screen Scr is set to a second distance Pa.

The signal processing device 170 can adjust the distance between the optical path separator 310 and the screen Scr based on the distance between the picture generation device 300 and the focus changer 365 or a focal length.

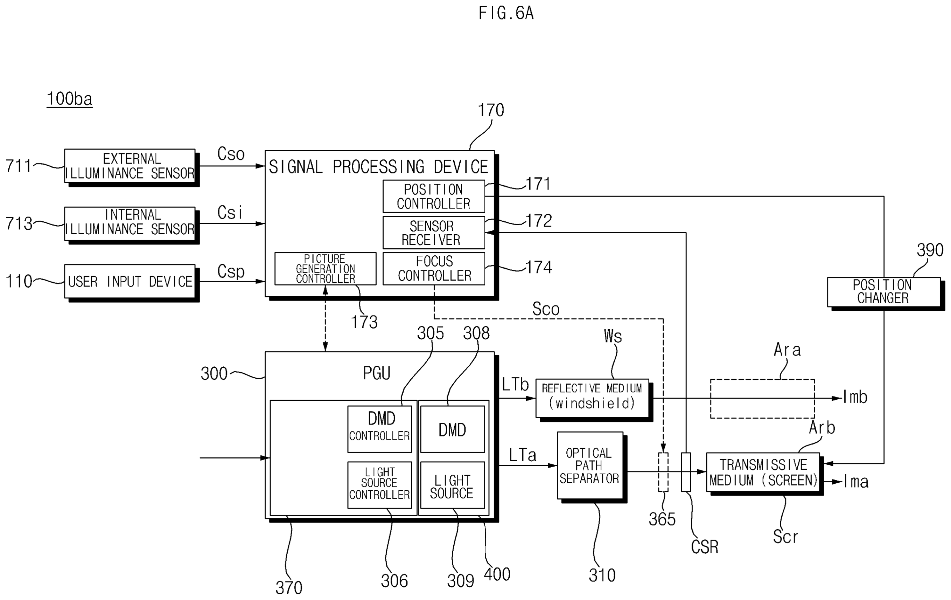

To this end, the vehicle display apparatus 100a can further include a position changer 390 (see FIG. 6A) for changing a position of the screen Scr.

That is, when the distance between the picture generation device 300 and the focus changer 365 is the first distance, the signal processing device 170 in the vehicle display apparatus 100a can set the distance between the optical path separator 310 and the screen Scr to the second distance.

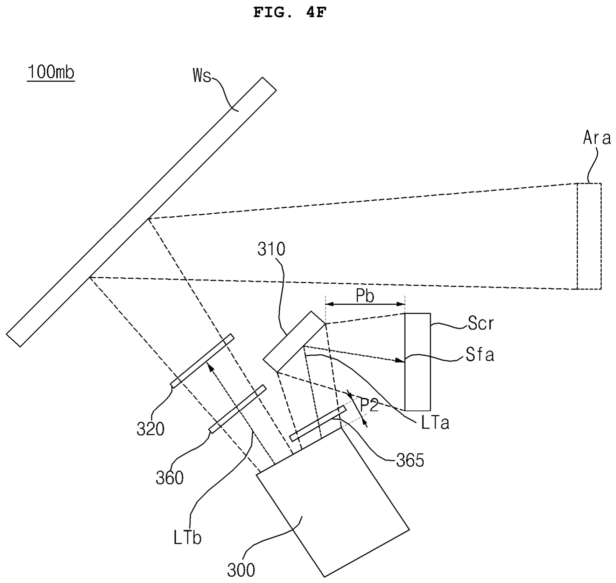

FIG. 4F illustrates an example in which, when the distance between the picture generation device 300 and the focus changer 365 in the vehicle display apparatus 100a is a third distance P2, the distance between the optical path separator 310 and the screen Scr is set to a fourth distance Pb.

When the distance between the picture generation device 300 and the focus changer 365 is the third distance P3 that is smaller than the first distance P1, the signal processing device 170 in the vehicle display apparatus 100a can set the distance between the optical path separator 310 and the screen Scr to the fourth distance Pb that is smaller than the second distance Pa. Accordingly, it is possible to achieve a compact vehicle display while implementing a plurality of displays in an integrated manner.

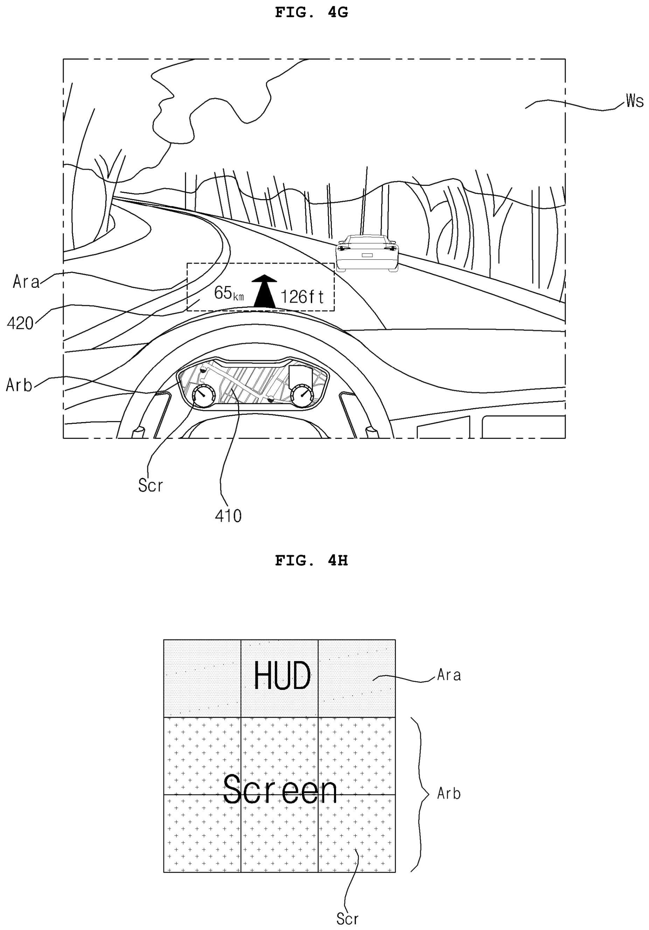

FIGS. 4G and 4H are diagrams for explaining the operation of the vehicle display apparatus of FIGS. 4A to 4D.

FIG. 4G illustrates that a cluster image 410 is displayed on a screen Scr, which is the first display 180a, and a HUD image 430 is displayed in a predetermined area Ara of a windshield Ws.

According to the vehicle display apparatus 100 of FIG. 4A, the vehicle display apparatus 100b of FIG. 4B, the vehicle display apparatus 100m of FIG. 4C, or the vehicle display apparatus 100n of FIG. 4D, the cluster image 410 can be displayed on the screen Scr, and the HUD image 430 can be displayed in the predetermined area Ara of the windshield Ws, as shown in FIG. 4G.

FIG. 4H illustrates an area Ara in which a HUD image is displayed by reflection on the windshield Ws, and an area Arb in which the screen Scr is positioned.

According to the vehicle display apparatus 100 of FIG. 4A, the vehicle display apparatus 100b of FIG. 4B, the vehicle display apparatus 100m of FIG. 4C, or the vehicle display apparatus 100n of FIG. 4D, as shown in FIG. 4H, the area Ara in which the HUD image is displayed and the area Arb in which the screen Scr is positioned can be displayed together, thereby enabling integrated implementation of the plurality of displays 180a and 180h.

FIGS. 5A and 5B illustrate various examples of an internal block diagram of the vehicle display apparatus of FIG. 4A or FIG. 4B.

FIG. 5A illustrates an example of an internal block diagram of the vehicle display apparatus of FIG. 4A.

Referring to FIG. 5A, the vehicle display apparatus 100 according to an embodiment of the present disclosure includes a signal processing device 170, a picture generation device 300, an optical path separator 310, a focus changer 365, a screen Scr, and a windshield WS.

As shown in the figure, the focus changer 365 can be disposed between the picture generation device 300 and the optical path separator 310.

A first projection image LTa, which is a portion of a projection image output from the picture generation device 300, can be reflected by the optical path separator 310. Therefore, the optical path separator 310 can also be referred to as a light reflector.

Meanwhile, a second projection image LTb, which is another portion of the projection image output from the picture generation device 300, is output to the windshield WS and is reflected by the windshield WS, which serves as a reflective medium.

The vehicle display apparatus 100 according to an embodiment of the present disclosure can further include a sensor CSR that is disposed between the optical path separator 310 and the screen Scr to sense the second projection image LTb.

The signal processing device 170 can control the focus changer 365.

Specifically, the signal processing device 170 can control the focus changer 365 based on a signal sensed by the sensor CSR.

For example, when the focus changer 365 includes a liquid lens 500 (see FIG. 7A) of which refractive index is changed in response to an electrical signal, the signal processing device 170 can change a level or a pulse width of a focus control signal Sco to change a focus of the liquid lens 500 (see FIG. 7A).

In another example, when the focus changer 365 includes an electrochromic material, a liquid crystal material, or suspended particles, the signal processing device 170 can change a level or a pulse width of the focus control signal Sco to change a focus of the electrochromic material, the liquid crystal material, or the suspended particles.

Meanwhile, the first projection image LTa that has passed through the focus changer 365 is incident on the screen Scr, which serves as a transmissive medium, thereby allowing a cluster image Ima to be displayed.

The second projection image LTb reflected from the windshield WS can be displayed as a HUD image Imb in a predetermined area Ara.

Meanwhile, when a focal length of the first projection image LTa reflected by the optical path separator 310 is greater than a focal length of the second projection image LTb reflected by the windshield WS, the signal processing device 170 can control the focal length of the first projection image LTa to decrease as a difference between the focal lengths increases. Accordingly, it is possible to change a focus of the first projection image LTa projected on the screen Scr.

Meanwhile, the signal processing device 170 can control a focus of the first projection image LTa to be a first distance in a first mode, and can control the focus of the first projection image LTa to be a second distance in a second mode. Accordingly, it is possible to change the focus of the first projection image LTa projected on the screen Scr.

Meanwhile, the vehicle display apparatus 100 according to an embodiment of the present disclosure can further include an external illuminance sensor 711, an internal illuminance sensor, and/or a user input device 110.

Based on an external illuminance Cso from the external illuminance sensor 711, an internal illuminance Csi from the internal illuminance sensor 713, or a setting input Csp from the user input device 110, the signal processing device 170 can output a control signal Sco for controlling a focal length of the focus changer 365.

For example, the signal processing device 170 can control the focal length of the first projection image LTa to decrease as the external illuminance Cso increases.

In another example, the signal processing device 170 can control the focal length of the first projection image LTa to decrease as the internal illuminance Csi decreases.

In another example, the signal processing device 170 can control the focal length of the first projection image LTa to decrease as the setting input Csp decreases. Accordingly, it is possible to change a focal length of the first projection image LTa projected on the screen Scr.

Meanwhile, the picture generation device 300 includes a light output device 400 for light output.

The light output device 400 can include a light source 309 and a digital mirror device 308 that reflects light emitted from the light source 309.

For example, the light source 309 can include an LED diode, a laser diode, or the like.

The digital mirror device 308 can include a plurality of digital mirrors. For example, the digital mirror device 308 can include a digital micromirror device (DMD).

Meanwhile, the picture generation device 300 can further include a digital mirror controller 305 for controlling the digital mirror device 308, and a light source controller 306 for controlling the light source 309.

In particular, the picture generation device 300 can be provided with a processor 370, and the processor 370 can include the digital mirror controller 305 for controlling the digital mirror device 308, and the light source controller 306 for controlling the light source 309.

Meanwhile, the signal processing device 170 can include a picture generation controller 173 for controlling the picture generation device 300, a focus controller 174 for controlling the focus changer 365, and a sensor receiver 172 for receiving a sensing signal from the sensor CSR.

The picture generation controller 173, the focus controller 174, and the sensor receiver 172 can be provided in the processor 175 of the signal processing device 170.

Meanwhile, in order to reduce a luminance difference between the first projection image LTa projected on the screen Scr and the second projection image LTb reflected on the windshield WS, the signal processing device 170 can control, on a frame-by-frame basis, a luminance of the first projection image LTa to be lower than a luminance of the second projection image LTb output from the light output device 400.

For example, the signal processing device 170 can control an area of the digital mirror device 308 corresponding to the first projection image LTa to be turned off during a first period.

In this case, the signal processing device 170 can control an area of the digital mirror device 308 corresponding to the second projection image LTb to be switched on or off during the first period.

That is, the signal processing device 170 can control the digital mirror device 308 such that, during the first period, a turn-off count or a turn-off frequency of the area corresponding to the first projection image LTa is greater than a turn-off count or a turn-off frequency of the area corresponding to the second projection image LTb. This allows the luminance of the first projection image LTa to be lower than the luminance of the second projection image LTb output from the light output device 400.

In another example, the signal processing device 170 can control, during the first period, a light source corresponding to the first projection image LTa to be at least partially turned off and a light source corresponding to the second projection image LTb to be switched on or off.

That is, the signal processing device 170 can control the light source 309 such that, during the first period, a turn-off count or a turn-off frequency of the light source corresponding to the first projection image LTa is greater than a turn-off count or a turn-off frequency of the light source corresponding to the second projection image LTb. This allows the luminance of the first projection image LTa to be lower than the luminance of the second projection image LTb output from the light output device 400.

Meanwhile, based on the external illuminance Cso from the external illuminance sensor 711, the internal illuminance Csi from the internal illuminance sensor 713, or the setting input Csp from the user input device 110, the signal processing device 170 can perform operation control of the digital mirror device 308 or the light source 309.

For example, in response to an increase in the external illumination Cso, the signal processing device 170 can control, on a frame-by-frame basis, the luminance of the first projection image LTa to be less than the luminance of the second projection image LTb output from the light output device 400.

In another example, in response to a decrease in the internal illumination Csi, the signal processing device 170 can control, on a frame-by-frame basis, the luminance of the first projection image LTa to be less than luminance of the second projection image LTb output from the light output device 400.

In another example, in response to a decrease in the setting input Csp, the signal processing device 170 can control, on a frame-by-frame basis, the luminance of the first projection image LTa to be less than luminance of the second projection image LTb output from the light output device 400.

FIG. 5B illustrates an example of an internal block diagram of the vehicle display apparatus of FIG. 4B.

Referring to FIG. 5B, the vehicle display apparatus 100b according to another embodiment of the present disclosure includes a signal processing device 170, a picture generation device 300, an optical path separator 310, a focus changer 365, a screen Scr, and a windshield WS.

As shown in the figure, the focus changer 365 can be disposed between the optical path separator 310 and the screen Scr.

Descriptions of operations of the signal processing device 170, the picture generation device 300, and the like are omitted, with reference to FIG. 5A.

FIG. 5C illustrates an example of an internal block diagram of the vehicle display apparatus of FIC. 4C.

Referring to FIG. 5C, the vehicle display apparatus 100b according to another embodiment of the present disclosure includes a signal processing device 170, a picture generation device 300, an optical path separator 310, a focus changer 365, a second focus changer 360, a screen Scr, and a windshield WS.

The focus changer 365 can be disposed between the picture generation device 300 and the optical path separator 310, as shown in the figure.

The second focus changer 360 can be disposed between the picture generation device 300 and the windshield WS, as shown in the figure.

Meanwhile, the signal processing device 170 can output a second focus control signal SCob to the second focus changer 360 for controlling the second focus changer 360, and can output a focus control signal SCoa to the focus changer 365 for controlling the focus changer 365.

Accordingly, it is possible to control focal lengths of the focus changer 365 and the second focus changer 360.

Descriptions of other operations of the signal processing device 170, operations of the picture generation device 300, and the like are omitted, with reference to FIG. 5A.

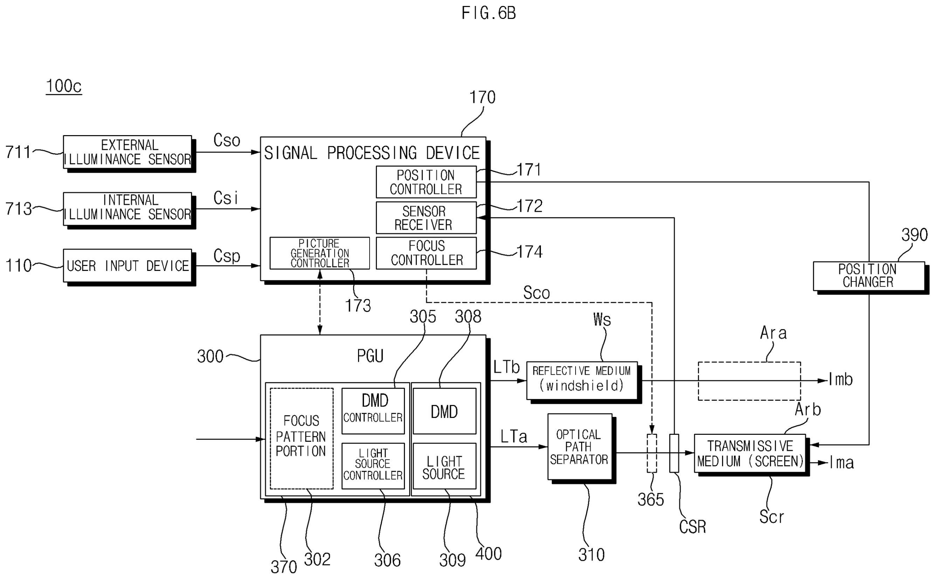

FIGS. 6A and 6B illustrate various examples of an internal block diagram of the vehicle display apparatus of FIG. 5B.

FIG. 6A illustrates another example of an internal block diagram of the vehicle display apparatus of FIG. 5B.

Referring to FIG. 6A, a display apparatus 100ba for a vehicle (or simply "vehicle display apparatus") according to another embodiment of the present disclosure differs in that it further includes a position changer 390 configured to change a position of the screen Scr based on a control signal of the signal processing device 170.

The position changer 390 can include an electric motor (not shown) or the like, and can move the position of the screen Scr toward or away from a driver.

FIGS. 6B illustrates another example of an internal block diagram of the vehicle display apparatus of FIG. 5B.

Referring to FIG. 6B, a display apparatus 100c for a vehicle (or simply "vehicle display apparatus") according to another embodiment of the present disclosure is similar to the vehicle display apparatus 100 of FIG. 5B, but differs in that a focus pattern portion 302 is further provided in the picture generation device 300b.

In addition, the vehicle display apparatus 100c according to another embodiment of the present disclosure further includes a position changer 390 configured to change a position of the screen Scr based on a control signal of the signal processing device 170.

The position changer 390 can include an electric motor (not shown) or the like, and can move the position of the screen Scr toward or away from a driver.

The picture generation device 300 outputs a projection image based on an input image from an external input or an input image from the signal processing device 170.

In this case, the focus pattern portion 302 in the picture generation device 300b can change a focus pattern based on the input image from the external input or the input image from the signal processing device 170.

For example, when the input image is a first type of image, the picture generation device 300 can change a diopter of a variable focal length lens to cause the focus pattern to be a first pattern.

In another example, when the input image is a second type of image, the picture generation device 300 can change the diopter of the variable focal length lens to cause the focus pattern to be a second pattern.

Meanwhile, the focus pattern portion 302 can be provided in the processor 370.

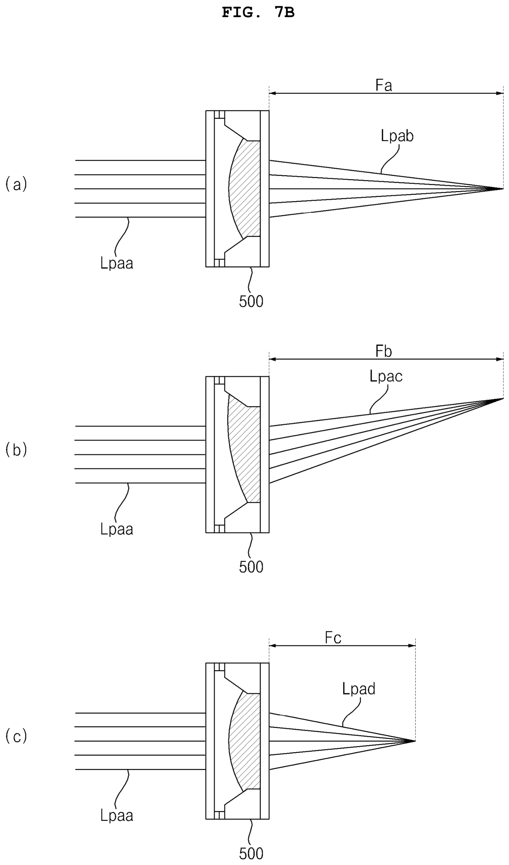

FIGS. 7A and 7B are diagrams for explaining a driving method of a liquid lens.

First, (a) of FIG. 7A illustrates a case in which a first voltage V1 is applied to the liquid lens 500 such that the liquid lens 500 operates as a concave lens.

Next, (b) of FIG. 7A illustrates a case in which a second voltage V2 greater than the first voltage V1 is applied to the liquid lens 500 such that the liquid lens 500 does not change a traveling direction of light.

Next, (c) of FIG. 7A illustrates a case in which a third voltage V3 greater than the second voltage V2 is applied to the liquid lens 500 such that the liquid lens 500 operates as a convex lens.

Although FIG. 7A illustrates that a curvature or a diopter of the liquid lens is changed according to a level of the applied voltage, the present disclosure is not limited thereto. The curvature or the diopter of the liquid lens can also be varied according to a pulse width of an applied pulse.

Next, (a) of FIG. 7B illustrates that the liquid lens 500 operates as a convex lens as the liquid in the liquid lens 500 has a uniform curvature.

That is, according to (a) of FIG. 7B, incident light Lpaa is converged, and corresponding output light Lpab is emitted. In this case, a focal length can be Fa.

Next, (b) of FIG. 7B illustrates that a traveling direction of light is changed upward as the liquid in the liquid lens 500 has an asymmetric curved surface.

That is, according to (b) of FIG. 7B, incident light Lpaa is converged upward, and corresponding output light Lpac is emitted.

Next, (c) of FIG. 7B illustrates that, as the asymmetric curved surface of the liquid in the liquid lens 500 is varied, a focal length of light is Fc, which is smaller than the focal length Fa of (a) of FIG. 7B.

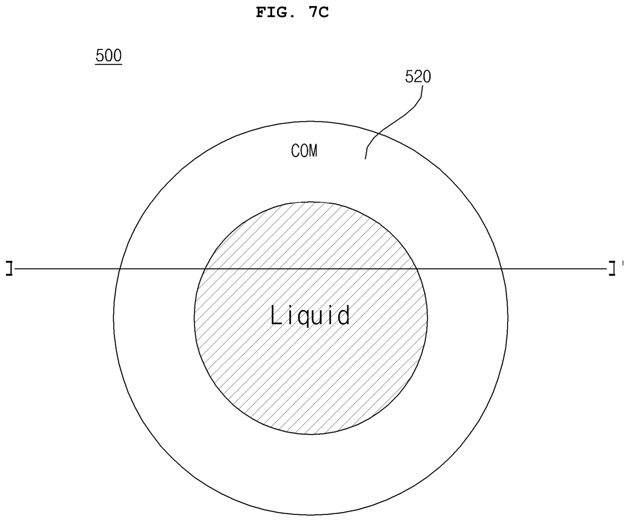

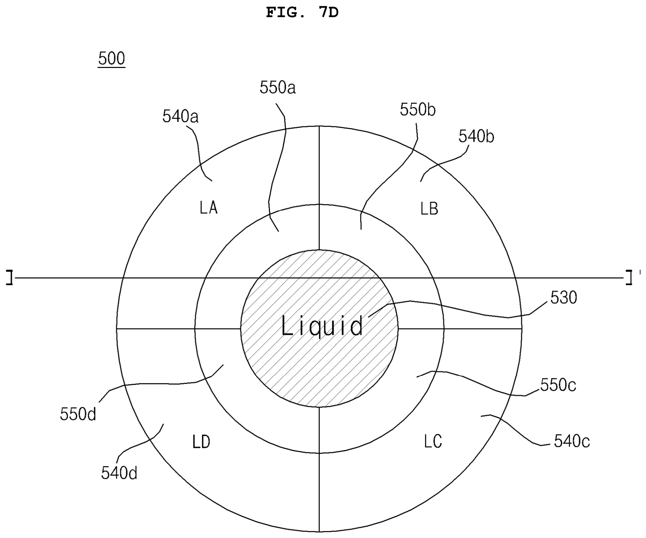

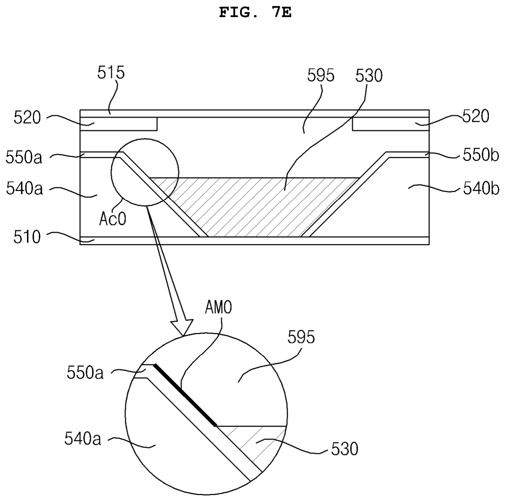

FIGS. 7C to 7E illustrate the structure of a liquid lens. In particular, FIG. 7C is a top view of the liquid lens, FIG. 7D is a bottom view of the liquid lens, and FIG. 7E is a cross-sectional view taken along line I-I' of FIGS. 7C and 7D.

More specifically, FIG 7C corresponds to the right side of the liquid lens 500 of FIGS. 7A and 7B, and FIG. 7D corresponds to the left side of the liquid lens 500 of FIGS. 7A and 7B.

Referring to the figures, the liquid lens 500 can include a common electrode (COM) 520 disposed at an upper portion thereof, as shown in FIG. 7C. In this case, the common electrode (COM) 520 can be arranged in a tubular form, and a liquid 530 can be disposed in a region under the common electrode (COM) 520, particularly in a region corresponding to a hollow portion.

Although not illustrated in the figures, for insulation of the common electrode (COM) 520, an insulator (not shown) can be disposed between the common electrode (COM) 520 and the liquid.

As shown in FIG. 7D, a plurality of electrodes (LA to LD) 540a to 540d can be disposed below the common electrode (COM) 520, particularly below the liquid 530. The plurality of electrodes (LA to LD) 540a to 540d can be arranged to surround the liquid 530.

In addition, a plurality of insulators 550a to 550d for insulation can be disposed between the liquid 530 and the plurality of electrodes (LA to LD) 540a to 540d.

That is, the liquid lens 500 can include the common electrode (COM) 520, the plurality of electrodes (LA to LD) 540a to 540d spaced apart from the common electrode (COM) 520, and the liquid 530 and an electroconductive aqueous solution 595 (see FIG. 7E) disposed between the common electrode (COM) 520 and the plurality of electrodes (LA to LD) 540a to 540d.

Referring to FIG. 7E, the liquid lens 500 can include a plurality of electrodes (LA to LD) 540a to 540d on a first substrate 510, a plurality of insulators 550a to 550d for insulating the plurality of electrodes (LA to LD) 540a to 540d, a liquid 530 on the plurality of electrodes (LA to LD) 540a to 540d, an electroconductive aqueous solution 595 on the liquid 530, a common electrode (COM) 520 spaced apart from the liquid 530, and a second substrate 515 on the common electrode (COM) 520.

The common electrode 520 can formed in a tubular shape with a hollow portion. The liquid 530 and the electroconductive aqueous solution 595 can be disposed in the hollow portion. As illustrated in FIGS. 7C and 7D, the liquid 530 can be arranged in a circular shape. In this case, the liquid 530 can be a non-conductive liquid such as oil.

Meanwhile, a size of the hollow portion can increase from the bottom to the top, and accordingly, sizes of the plurality of electrodes (LA to LD) 540a to 540d can decrease from the bottom to the top.

In FIG. 7E, it is illustrated that the first electrode (LA) 540a and the second electrode (LB) 540b among the plurality of electrodes (LA to LD) 540a to 540d are formed in an inclined manner and have sizes that decrease from the bottom to the top.

Meanwhile, unlike FIGS. 7C to 7E, the plurality of electrodes (LA to LD) 540a to 540d can be provided at an upper position corresponding to the position of the common electrode 520, and the common electrode 520 can be provided at a lower position.

Although four electrodes are illustrated as the plurality of electrodes in FIGS. 7C to 7E, the present disclosure is not limited thereto. Any suitable number of two or more electrodes can alternatively be provided.

Meanwhile, in FIG. 7E, when a pulse-type electrical signal is applied to the first electrode (LA) 540a and the second electrode (LB) 540b a predetermined time after a pulse-type electrical signal is applied to the common electrode 520, a potential difference is generated between the common electrode 520, the first electrode (LA) 540a, and the second electrode (LB) 540b, which causes a change in shape of the electroconductive aqueous solution 595 having electrical conductivity, and in response to the change in the shape of the electroconductive aqueous solution 595, a shape of the liquid 530 in the liquid lens is changed.

Meanwhile, in the present disclosure, a curvature of the liquid 530 is changed according to electrical signals respectively applied to the plurality of electrodes (LA to LD) 540a to 540d and the common electrode 520, thereby varying a focal length of the focus changer 365.

To this end, a sensor device 962 in the present disclosure detects a size of an area or a change in the area of a boundary region Ac0 between the first insulator 550a on the first electrode 540a in the liquid lens 500 and the electroconductive aqueous solution 595.

In FIG. 7E, the area of the boundary region Ac0 is illustrated as AM0. In particular, the area of the boundary region Ac0 in which an inclined portion of the first insulator 550a on the first electrode 540a in contact with the electroconductive aqueous solution 595 is illustrated as AM0.

In FIG. 7E, it is illustrated that the liquid 530 is neither concave nor convex, but is parallel to the first substrate 510. In this case, the curvature can be defined as zero (0), for example.

As shown in FIG. 7E, for the boundary region Ac0 in which the inclined portion of the first insulator 550 on the first electrode 540a contacts the electroconductive aqueous solution 595, a capacitance C can be formed according to Equation 1 below.

【Equation 1】

$$C = \varepsilon \frac{A}{d}$$

Here, ε represents a permittivity of a dielectric 550a, A represents an area of the boundary region Ac0, and d represents a thickness the first dielectric 550a.

Here, assuming that ε and d are fixed values, a factor that greatly affects the capacitance C can be the area of the boundary region Ac0.

That is, as the area of the boundary region Ac0 increases, the capacitance C formed in the boundary region Ac0 can increase.

In the present disclosure, since the area of the boundary region Ac0 is changed as the curvature of the liquid 530 is varied, the area of the boundary region Ac0 or the capacitance C formed in the boundary region Ac0 is sensed using the sensor device 962.

Meanwhile, the capacitance of FIG. 7E can be defined as CAcO.

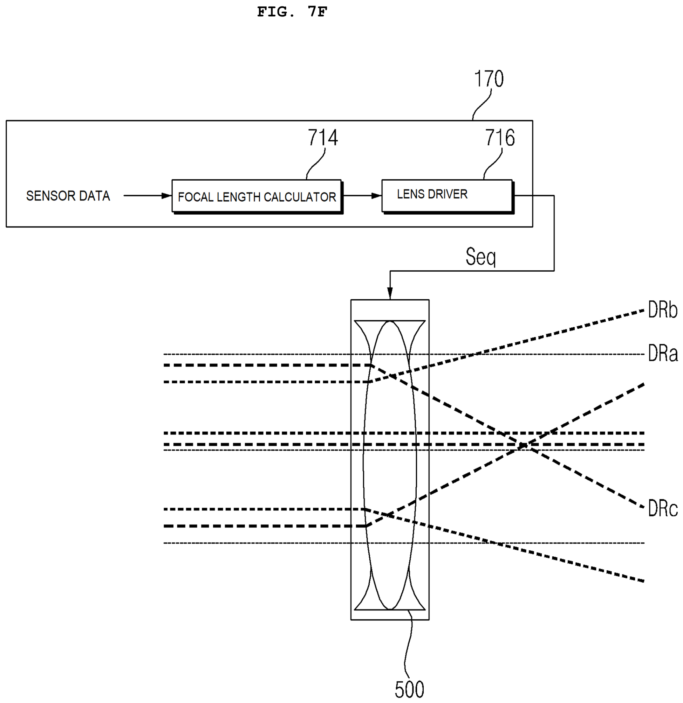

FIG. 7F illustrates control of the liquid lens 500 by the signal processing device 170.

Referring to FIG. 7F, the signal processing device 170 can include a focal length calculator 714 configured to calculate a focal length based on a signal sensed by the sensor CSR, and a lens driver 716 configured to output a lens driving control signal Sco based on the calculated focal length.

The lens driving control signal Sco can also be referred to as a focus control signal.

Meanwhile, according to the lens driving control signal Sco, light incident on the liquid lens 500 can maintain its traveling direction as indicated by DRa, can be diverged as indicated by DRb, or can be converged as indicated by DRc.

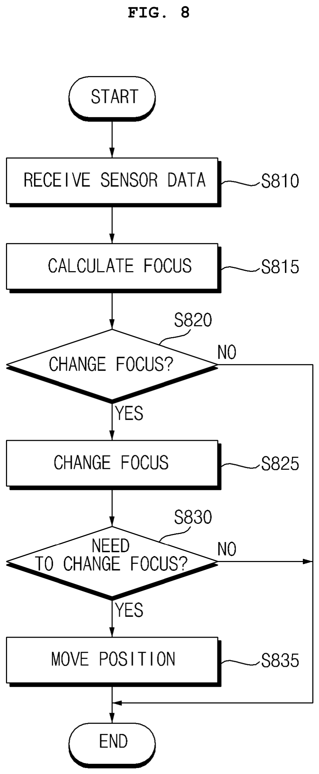

FIG. 8 is a flowchart illustrating an example of an operation of a display apparatus for a vehicle according to an embodiment of the present disclosure.

Referring to FIG. 8, the signal processing device 170 in the vehicle display apparatus 100 receives sensor data from the sensor CSR (S810).

Next, the signal processing device 170 calculates a current focal length of a projection image based on the sensor data from the sensor CSR (S815).

For example, based on the sensor data from the sensor CSR, the signal processing device 170 calculates a current focal length of a first projection image LTa (S815).

Next, the signal processing device 170 compares the calculated focal length with a target focal length to determine whether a focus adjustment is required (S825).

When the focus adjustment is required, the signal processing device 170 can output a focus control signal Sco for changing a focus (S825).

For example, when a decrease in the focal length is required, the signal processing device 170 can be configured to increase a pulse width or a pulse level of the focus control signal Sco from a first level to a second level.

In another example, when an increase in the focal length is required, the signal processing device 170 can be configured to decrease the pulse width or the pulse level of the focus control signal Sco from the first level to a third level.

Accordingly, it is possible to change the focal length of the first projection image LTa.

Next, based on the sensor data from the sensor CSR, the signal processing device 170 determines whether a position movement of the screen Scr is required (S835).

When the position movement is required, the signal processing device 170 can output a control signal for moving a screen position to the position changer 390 (S835).

For example, when a decrease in the position of the screen Scr is required, the signal processing device 170 can be configured to increase a pulse width or a pulse level of the position control signal.

In another example, when an increase in the position of the screen Scr is required, the signal processing device 170 can be configured to decrease the pulse width or the pulse level of the position control signal.

Accordingly, it is possible to move the position of the screen Scr toward or away from a driver.

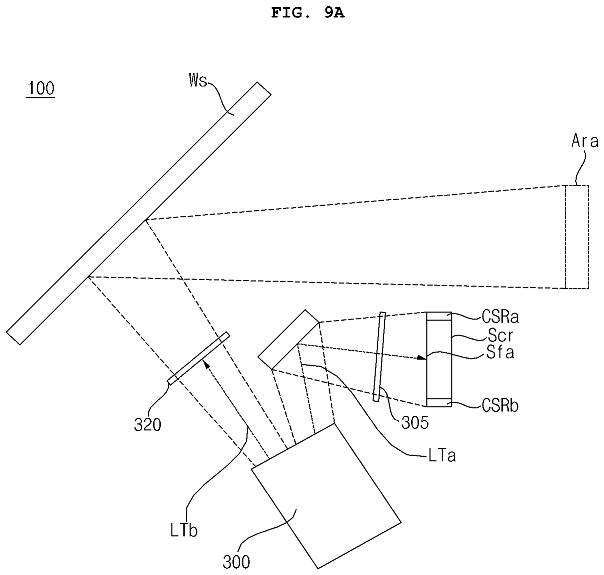

FIGS. 9A to 10C are diagrams referred to in the description of FIG. 8.

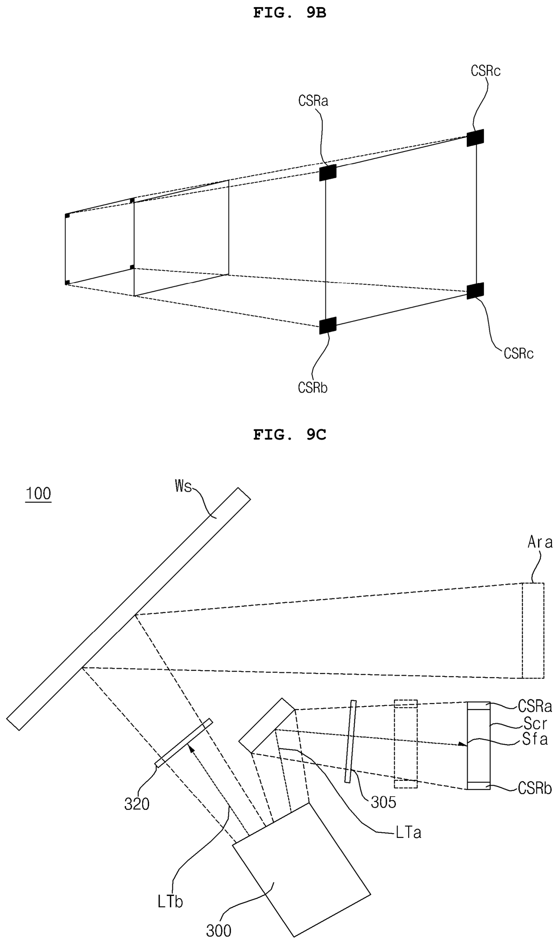

FIGS. 9A and 9B illustrate that the sensor CSR includes a plurality of sensors CSra, CSrb, CSrc, and CSrd, and the plurality of sensors CSra, CSrb, CSrc, and CSrd are respectively disposed at corners of the screen SCR.

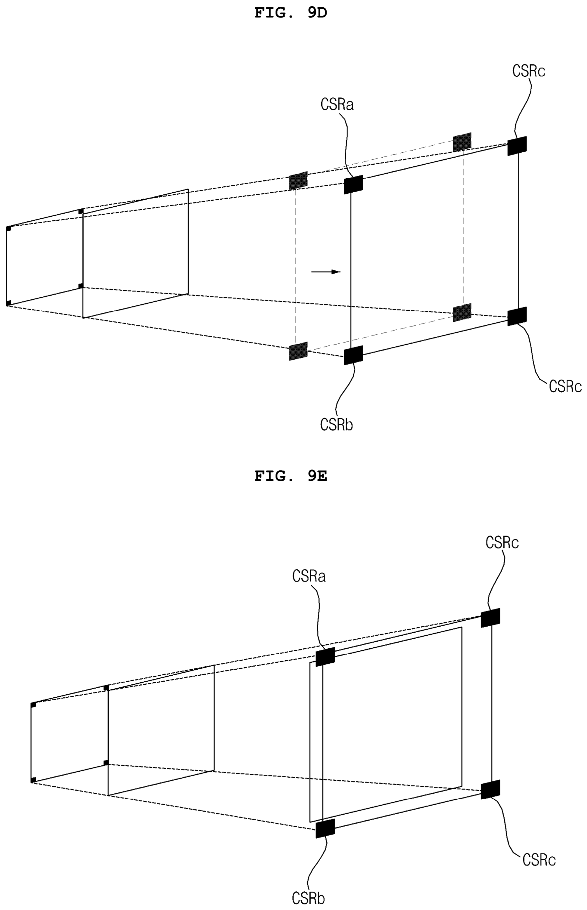

FIGS. 9C and 9D illustrate that the screen Scr is moved toward a driver as the position changer 390 operates based on a position control signal from the signal processing device 170.

For example, based on the position control signal from the signal processing device 170, a length of a linker (now shown) connected to the screen Scr in the position changer 390 can be increased, thereby moving the position of the screen Scr toward the driver.

FIG. 9E illustrates that the screen Scr is moved away from a driver as the position changer 390 operates based on a position control signal from the signal processing device 170.

For example, based on the position control signal from the signal processing device 170, a length of a linker (now shown) connected to the screen Scr in the position changer 390 can be decreased, thereby moving the position of the screen Scr away from the driver.

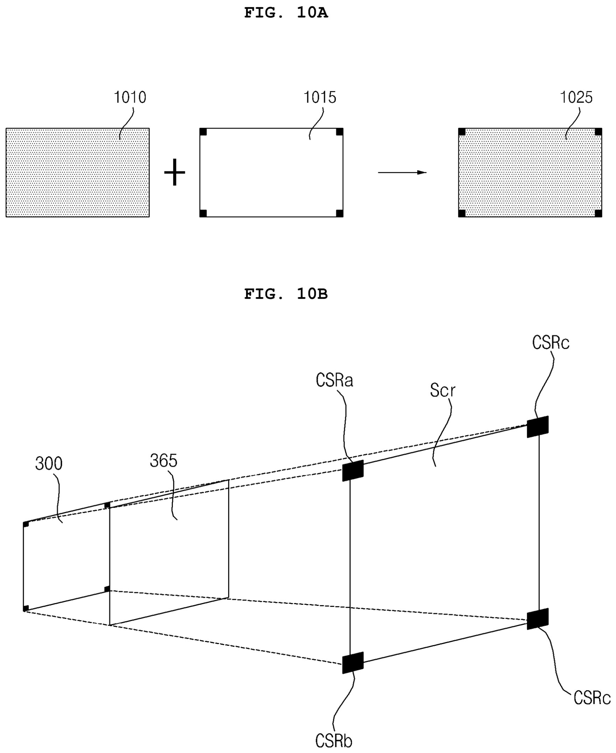

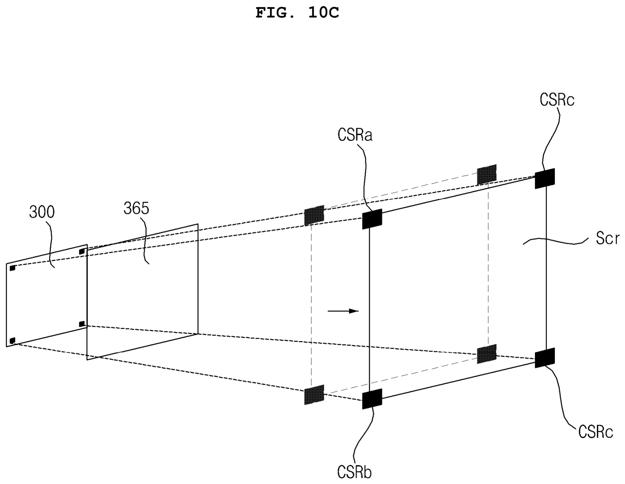

FIG. 10A illustrates that a focus pattern frame is added to an input image frame.

Referring to FIG 10A, the picture generation device 300 generates and outputs a projection image frame 1025 by adding a focus pattern frame 1015 to an input image frame 1010.

In this case, patterns for sensing by the plurality of sensors CSra, CSrb, CSrc, and CSrd can be respectively disposed at corners of the focus pattern frame 1015.

Meanwhile, the picture generation device 300 can add the focus pattern frame 1015 having a second frame rate lower than a first frame rate to the input image frame 1010 having the first frame rate, thereby generating and outputting the projection image frame 1025 having the first frame rate.

Here, the first frame rate can be 60Hz, and the second frame rate can be 20Hz.

Meanwhile, addition of the focus pattern frame 1015 can be performed by the focus pattern portion 302 in the picture generation device 300.

FIG. 10B illustrates that a first projection image LTa from the picture generation device 300 is projected on the screen Scr after passing through the focus changer 365.

In particular, the projection image frame 1025 of FIG. 10A can be projected on the screen Scr.

Meanwhile, the signal processing device 170 can determine focus adjustment, screen movement, or the like based on a signal sensed by the sensor CSR in correspondence with a pattern in the projection image frame 1025.

FIG. 10B illustrates that the screen Scr is moved toward a driver as the position changer 390 operates based on a position control signal from the signal processing device 170.

For example, based on the position control signal from the signal processing device 170, a length of a linker (not shown) connected to the screen Scr in the position changer 390 can be increased, thereby moving the position of the screen Scr toward the driver.

Accordingly, the first projection image LTa can be stably viewed by the driver.

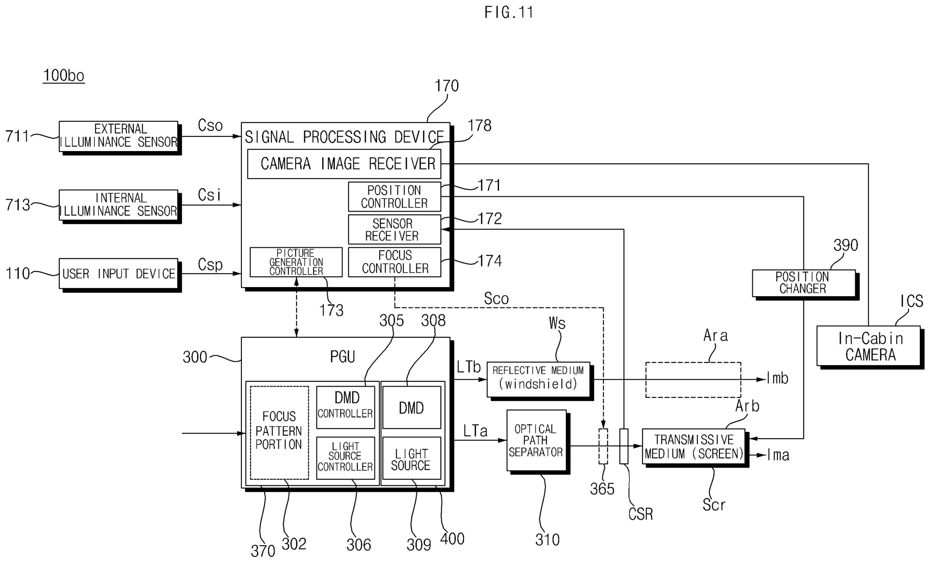

FIG. 11 illustrates another example of an internal block diagram of the vehicle display apparatus of FIGS. 4A to 4B.

Referring to FIG. 11, a display apparatus 100c for a vehicle (or simply "vehicle display apparatus) according to another embodiment of the present disclosure is similar to the vehicle display apparatus of FIG. 6B, except that it further includes an in-cabin camera ICS.

Based on a camera image from the in-cabin camera ICS, the signal processing device 170 can determine whether a position change of the screen Scr is required.

When the position change of the screen Scr is required, the signal processing device 170 can output a position change control signal to the position changer 390.

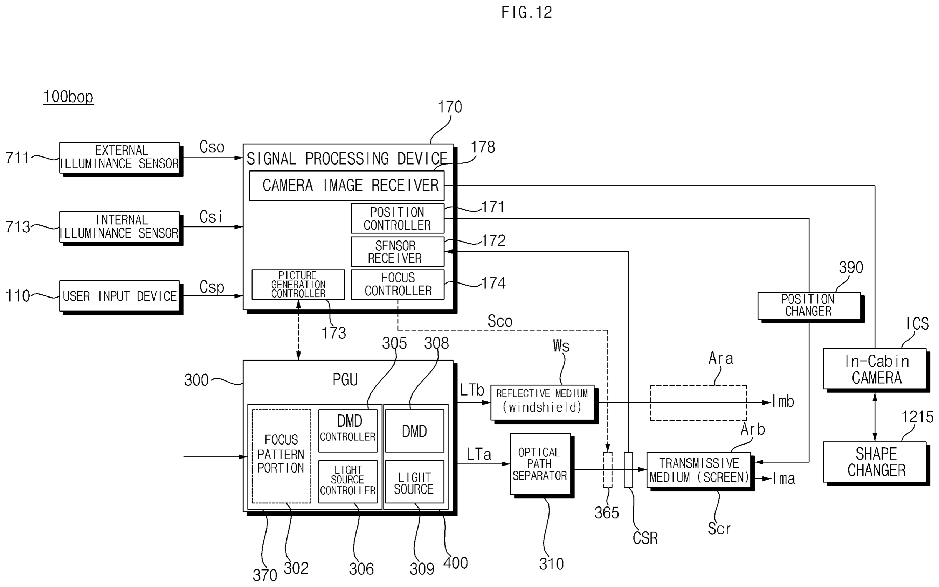

FIG. 12 illustrates another example of an internal block diagram of the vehicle display apparatus of FIGS. 4A to 4B.

Referring to FIG. 12, a display apparatus 100d for a vehicle (or simply "vehicle display apparatus") according to another embodiment of the present disclosure is similar to the vehicle display apparatus of FIG. 11, except that it further includes a shape changer 1215.

The shape changer 1215 can change a shape of the screen Scr.

To this end, the shape changer 1215 can include a driving motor (not shown) or the like.

Based on a camera image from the in-cabin camera ICS, the signal processing device 170 can determine whether a position change of the screen Scr is required.

Alternatively, based on the camera image from the in-cabin camera ICS, the signal processing device 170 can determine whether a shape change of the screen Scr is required.

When the shape change of the screen Scr is required, the signal processing device 170 can output a shape change control signal to the shape changer 1215.

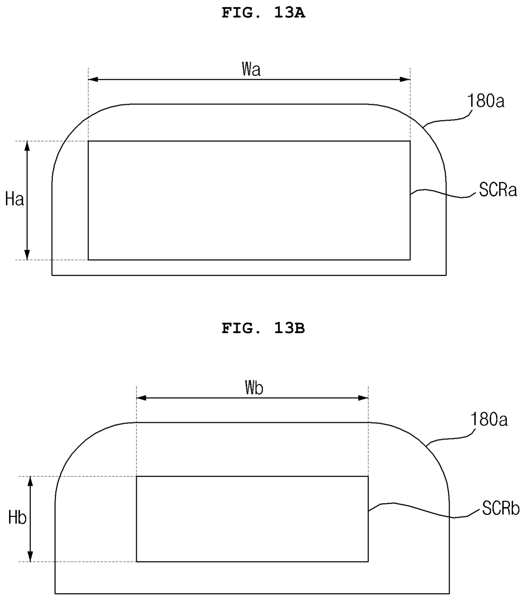

FIGS. 13A to 13D are diagrams referred to in the description of FIG. 12.

FIG. 13A illustrates that a rectangular screen Scra is disposed in a cluster area 180a.

In this case, the screen Scra can have a first width Wa and a first height ha.

The signal processing device 170 can change a size of the screen Scra.

FIG. 13B illustrates an example in which a size of a screen (Scrb) is reduced.

In particular, FIG. 13B illustrates that a rectangular screen Scrb is disposed in the cluster area 180a, and the screen Scrb can have a second width Wb smaller than the first width Wa and a second height hb smaller than the first height ha, as compared with FIG. 13A.

The signal processing device 170 can change a height of the screen Scra.

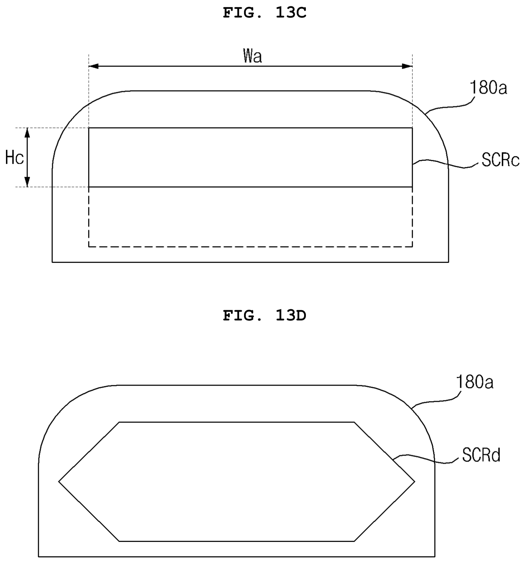

FIG. 13C illustrates an example in which a height of a screen (Scrc) is reduced.

In particular, FIG. 13C illustrates that a rectangular screen Scrc is disposed in the cluster area 180a, and the screen Scrc can have a third height hc smaller than the first height ha while maintaining the first width Wa, as compared with FIG. 13A.

The signal processing device 170 can change a shape of the screen Scra.

FIG. 13D illustrates an example in which a shape of a screen (Scrd) is changed from a rectangular shape to a hexagonal shape.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A display apparatus for a vehicle, the display apparatus comprising:

   a picture generation device including a light output device and configured to output a projection image;
   an optical path separator configured to reflect a first projection image corresponding to a portion of the projection image from the picture generation device;
   a screen including one surface on which the first projection image from the optical path separator is projected; and
   a focus changer disposed between the picture generation device and the optical path separator or between the optical path separator and the screen, and configured to change a focus of the first projection image.

2. The display apparatus of claim 1, wherein the focus changer includes at least one of a concave lens or a convex lens.

3. The display apparatus of claim 1, further comprising a signal processing device configured to control the focus changer,
   wherein the focus changer includes a liquid lens of which focus is changed in response to an electrical signal.

4. The display apparatus of claim 1, further comprising a diffuser disposed between the picture generation device and a windshield, and configured to diffuse a second projection image corresponding to another portion of the projection image.

5. The display apparatus of claim 1, further comprising:

   a diffuser disposed between the picture generation device and a windshield, and configured to diffuse a second projection image corresponding to another portion of the projection image; and
   a second focus changer disposed between the picture generation device and the diffuser, and configured to change a focus of the second projection image.

6. The display apparatus of claim 5, wherein the second focus changer includes at least one of a concave lens or a convex lens.

7. The display apparatus of claim 5, further comprising a signal processing device configured to control the second focus changer,
   wherein the second focus changer includes a liquid lens of which focus is changed in response to an electrical signal.

8. The display apparatus of claim 1, wherein, when a distance between the picture generation device and the focus changer is a first distance, a distance between the optical path separator and the screen is set to a second distance, and
   wherein, in response to the distance between the picture generation device and the focus changer being a third distance less than the first distance, the distance between the optical path separator and the screen is set to a fourth distance less than the second distance.

9. The display apparatus of claim 1, further comprising:

   a sensor disposed between the optical path separator and the screen, and configured to sense the second projection image; and
   a signal processing device configured to control the focus changer based on a signal sensed by the sensor.

10. The display apparatus of claim 9, further comprising a position changer configured to change a position of the screen based on a control signal of the signal processing device.

11. The display apparatus of claim 9, further comprising:

    a camera disposed inside the vehicle; and
    a shape changer configured to change a shape of the screen based on a control signal from the signal processing device, the control signal being generated based on a camera image from the camera.

12. The display apparatus of claim 3, wherein the signal processing device is configured to:

    control a focus of the first projection image to be a first distance in a first mode; and
    control the focus of the first projection image to be a second distance in a second mode.

13. The display apparatus of claim 1, wherein the light output device comprises:

    a light source; and
    a liquid crystal panel configured to output the first projection image and the second projection image based on light output from the light source.

14. A display apparatus for a vehicle, the display apparatus comprising:

    a picture generation device including a light output device and configured to output a projection image;
    an optical path separator configured to reflect a first projection image corresponding to a portion of the projection image from the picture generation device;
    a diffuser disposed between the picture generation device and a windshield, and configured to diffuse a second projection image corresponding to another portion of the projection image;
    a focus changer disposed between the picture generation device and the diffuser, and configured to change a focus of the second projection image; and
    a screen including one surface on which the first projection image from the optical path separator is projected.

15. The display apparatus of claim 14, wherein the focus changer includes at least one of a concave lens or a convex lens.

16. The display apparatus of claim 14, further comprising a signal processing device configured to control the focus changer,
    wherein the focus changer includes a liquid lens of which focus is changed in response to an electrical signal.

FIG. 1

FIG. 2

FIG. 3

SERVER 900

MOBILE TERMINAL 800

TRANSCEIVER 120

INPUT DEVICE 110

SIGNAL PROCESSING DEVICE 170

PROCESSOR 175

MICROCOMPUTER 135

MEMORY 140b

MEMORY 140a

100

ECU 770

SENSOR DEVICE 760

CAMERA 195

TUNER 105

INTERFACE 130

THIRD DISPLAY 180c

SECOND DISPLAY 180b

FIRST DISPLAY 180a

POWER SUPPLY 190

AUDIO OUTPUT DEVICE 185

FIG. 4A

FIG. 4B

FIG. 4C

FIG. 4D

FIG. 4E

FIG. 4F

**FIG. 4G**

**FIG. 4H**

FIG.5A

EP 4 737 983 A1

100

711 — EXTERNAL ILLUMINANCE SENSOR — Cso

713 — INTERNAL ILLUMINANCE SENSOR — Csi

110 — USER INPUT DEVICE — Csp

170 — SIGNAL PROCESSING DEVICE

SENSOR RECEIVER — 172

PICTURE GENERATION CONTROLLER

FOCUS CONTROLLER — 174

173

Sco

300 — PGU

305  308

DMD CONTROLLER

DMD

LIGHT SOURCE CONTROLLER

LIGHT SOURCE

370

306  309  400

LTb — REFLECTIVE MEDIUM (windshield) — Ws

Ara — Imb

Arb

LTa — OPTICAL PATH SEPARATOR — 310

365

CSR

TRANSMISSIVE MEDIUM (SCREEN) — Ima

Scr

FIG.5B

100b

EP 4 737 983 A1

FIG.5C

100m

711 — EXTERNAL ILLUMINANCE SENSOR

713 — INTERNAL ILLUMINANCE SENSOR

110 — USER INPUT DEVICE

Cso

Csi

Csp

170

SIGNAL PROCESSING DEVICE

SENSOR RECEIVER — 172

PICTURE GENERATION CONTROLLER

FOCUS CONTROLLER — 174

173

305  308  Scoa  Scob  Ws  Ara

300 — PGU

DMD CONTROLLER

DMD

LIGHT SOURCE CONTROLLER

LIGHT SOURCE

LTb

LTa

360

365

REFLECTIVE MEDIUM (windshield)

OPTICAL PATH SEPARATOR

Imb

Arb

CSR

TRANSMISSIVE MEDIUM (SCREEN)

Ima

Scr

370  306  309  400  310

EP 4 737 983 A1

30

FIG.6A

EP 4 737 983 A1

FIG.6B

100c

EP 4 737 983 A1

32

FIG. 7A

(a)

500

V1

(b)

500

V2>V1

(c)

500

V3>V2

# FIG. 7B

(a)

Fa

Lpab

Lpaa

500

(b)

Fb

Lpac

Lpaa

500

(c)

Fc

Lpad

Lpaa

500

FIG. 7C

500

520

COM

Liquid

FIG. 7D

500

FIG. 7E

FIG. 7F

170

714    716

SENSOR DATA → FOCAL LENGTH CALCULATOR → LENS DRIVER

Seq

DRb

DRa

DRc

500

**FIG. 8**

FIG. 9A

## FIG. 9B

## FIG. 9C

**FIG. 9D**

**FIG. 9E**

FIG. 10A

FIG. 10B

FIG. 10C

FIG.11

100bo

711 — EXTERNAL ILLUMINANCE SENSOR — Cso →

170

178

SIGNAL PROCESSING DEVICE

CAMERA IMAGE RECEIVER

713 — INTERNAL ILLUMINANCE SENSOR — Csi →

POSITION CONTROLLER — 171

SENSOR RECEIVER — 172

110 — USER INPUT DEVICE — Csp →

PICTURE GENERATION CONTROLLER

FOCUS CONTROLLER — 174

173

Sco

305  308

Ws

390

POSITION CHANGER

ICS

In-Cabin CAMERA

300 — PGU

FOCUS PATTERN PORTION

DMD CONTROLLER

DMD

LTb → REFLECTIVE MEDIUM (windshield)

Ara

Imb

Arb

LIGHT SOURCE CONTROLLER

LIGHT SOURCE

LTa → OPTICAL PATH SEPARATOR

TRANSMISSIVE MEDIUM (SCREEN) → Ima

370  302  306  309  400

310

365

CSR

Scr

EP 4 737 983 A1

45

FIG.12

EP 4 737 983 A1

100bop

| 711 — EXTERNAL ILLUMINANCE SENSOR | Cso → | |

170
178

SIGNAL PROCESSING DEVICE

CAMERA IMAGE RECEIVER

| 713 — INTERNAL ILLUMINANCE SENSOR | Csi → |

POSITION CONTROLLER — 171

SENSOR RECEIVER — 172

| 110 — USER INPUT DEVICE | Csp → |

PICTURE GENERATION CONTROLLER

FOCUS CONTROLLER — 174

173

Sco

390

POSITION CHANGER

ICS

In-Cabin CAMERA

300 — PGU

305   308

Ws

Ara

FOCUS PATTERN PORTION

DMD CONTROLLER

DMD

LTb

REFLECTIVE MEDIUM (windshield)

→ Imb

Arb

1215

SHAPE CHANGER

LIGHT SOURCE CONTROLLER

LIGHT SOURCE

LTa

OPTICAL PATH SEPARATOR

TRANSMISSIVE MEDIUM (SCREEN)

→ Ima

370   302     306     309   400

310

365

CSR

Scr

46

**FIG. 13A**

**FIG. 13B**

FIG. 13C

FIG. 13D

# EP 4 737 983 A1

<table>
<tr><td colspan="2"><strong>INTERNATIONAL SEARCH REPORT</strong></td><td>International application No.<br><strong>PCT/KR2023/008894</strong></td></tr>
</table>

| A. | CLASSIFICATION OF SUBJECT MATTER |
|---|---|

G02B 27/01(2006.01)i; G02B 27/00(2006.01)i; G02B 3/12(2006.01)i; B60K 35/00(2006.01)i; G02B 3/00(2006.01)i

According to International Patent Classification (IPC) or to both national classification and IPC

| B. | FIELDS SEARCHED |
|---|---|

Minimum documentation searched (classification system followed by classification symbols)

G02B 27/01(2006.01); B60K 35/00(2006.01); G02B 7/28(2006.01); G02B 7/36(2006.01); G06F 3/03(2006.01); H04B 1/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영상(video), 반사(reflection), 스크린(screen), 초점(focus)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 112789545 A (HUAWEI TECHNOLOGIES CO., LTD.) 11 May 2021 (2021-05-11)<br>See paragraphs [0074]-[0077] and figures 4-8c. | 1-16 |
| Y | KR 10-2023-0005390 A (HUAWEI TECHNOLOGIES CO., LTD.) 09 January 2023 (2023-01-09)<br>See paragraphs [0064]-[0075] and figures 2-6b. | 1-16 |
| Y | JP 06-250079 A (MINOLTA CAMERA CO., LTD.) 09 September 1994 (1994-09-09)<br>See paragraph [0022] and figures 2-5. | 9-11 |
| Y | KR 10-2012-0132096 A (LG ELECTRONICS INC.) 05 December 2012 (2012-12-05)<br>See paragraphs [0090]-[0091], claim 22 and figures 10-12. | 11 |
| Y | JP 2020-173314 A (JVC KENWOOD CORP.) 22 October 2020 (2020-10-22)<br>See paragraph [0043] and figures 1-3. | 12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 March 2024** | **20 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| | | International application No. |
|---|---|---|
| | | **PCT/KR2023/008894** |

| Patent document cited in search report | | | Publication date (day/month/year) | Patent family member(s) | | | Publication date (day/month/year) |
|---|---|---|---|---|---|---|---|
| CN | 112789545 | A | 11 May 2021 | CN | 112789545 | B | 10 February 2023 |
| | | | | WO | 2022-188096 | A1 | 15 September 2022 |
| KR | 10-2023-0005390 | A | 09 January 2023 | AU | 2021-107213 | A4 | 09 December 2021 |
| | | | | CN | 111171155 | A | 19 May 2020 |
| | | | | CN | 111171155 | B | 19 February 2021 |
| | | | | CN | 111500504 | A | 07 August 2020 |
| | | | | CN | 111500504 | B | 25 December 2020 |
| | | | | CN | 111667463 | A | 15 September 2020 |
| | | | | CN | 111667463 | B | 15 December 2023 |
| | | | | CN | 113112502 | A | 13 July 2021 |
| | | | | CN | 113112502 | B | 20 October 2023 |
| | | | | CN | 113225453 | A | 06 August 2021 |
| | | | | CN | 113225453 | B | 15 February 2022 |
| | | | | CN | 113671697 | A | 19 November 2021 |
| | | | | CN | 113986071 | A | 28 January 2022 |
| | | | | CN | 114002872 | A | 01 February 2022 |
| | | | | CN | 114415370 | A | 29 April 2022 |
| | | | | CN | 114415370 | B | 06 June 2023 |
| | | | | CN | 114550791 | A | 27 May 2022 |
| | | | | CN | 115428427 | A | 02 December 2022 |
| | | | | CN | 210165598 | U | 20 March 2020 |
| | | | | EP | 4002827 | A1 | 25 May 2022 |
| | | | | EP | 4101867 | A1 | 14 December 2022 |
| | | | | EP | 4141518 | A1 | 01 March 2023 |
| | | | | EP | 4191390 | A1 | 07 June 2023 |
| | | | | JP | 2023-513200 | A | 30 March 2023 |
| | | | | JP | 2023-525853 | A | 19 June 2023 |
| | | | | KR | 10-2022-0137723 | A | 12 October 2022 |
| | | | | US | 11250765 | B2 | 15 February 2022 |
| | | | | US | 11842788 | B2 | 12 December 2023 |
| | | | | US | 11851599 | B2 | 26 December 2023 |
| | | | | US | 2021-0241112 | A1 | 05 August 2021 |
| | | | | US | 2021-0356698 | A1 | 18 November 2021 |
| | | | | US | 2021-0358386 | A1 | 18 November 2021 |
| | | | | US | 2021-0363424 | A1 | 25 November 2021 |
| | | | | US | 2022-0028487 | A1 | 27 January 2022 |
| | | | | US | 2022-0165351 | A1 | 26 May 2022 |
| | | | | US | 2022-0377162 | A1 | 24 November 2022 |
| | | | | US | 2023-0071422 | A1 | 09 March 2023 |
| | | | | US | 2023-0076388 | A1 | 09 March 2023 |
| | | | | US | 2023-0185506 | A1 | 15 June 2023 |
| | | | | US | 2023-0186514 | A1 | 15 June 2023 |
| | | | | US | 2023-0193194 | A1 | 22 June 2023 |
| | | | | US | 2023-0400630 | A1 | 14 December 2023 |
| | | | | WO | 2020-244584 | A1 | 10 December 2020 |
| | | | | WO | 2021-155634 | A1 | 12 August 2021 |
| | | | | WO | 2021-155635 | A1 | 12 August 2021 |
| | | | | WO | 2021-155767 | A1 | 12 August 2021 |
| | | | | WO | 2021-158085 | A1 | 12 August 2021 |
| | | | | WO | 2021-227185 | A1 | 18 November 2021 |

Form PCT/ISA/210 (patent family annex) (July 2022)

**INTERNATIONAL SEARCH REPORT**
Information on patent family members

International application No.

**PCT/KR2023/008894**

| Patent document cited in search report | | | Publication date (day/month/year) | Patent family member(s) | | | Publication date (day/month/year) |
|---|---|---|---|---|---|---|---|
| | | | | WO | 2021-227249 | A1 | 18 November 2021 |
| | | | | WO | 2021-227357 | A1 | 18 November 2021 |
| | | | | WO | 2021-227654 | A1 | 18 November 2021 |
| | | | | WO | 2021-228194 | A1 | 18 November 2021 |
| | | | | WO | 2021-228229 | A1 | 18 November 2021 |
| | | | | WO | 2021-232799 | A1 | 25 November 2021 |
| | | | | WO | 2022-022080 | A1 | 03 February 2022 |
| | | | | WO | 2022-022156 | A1 | 03 February 2022 |
| | | | | WO | 2022-110858 | A1 | 02 June 2022 |
| JP | 06-250079 | A | 09 September 1994 | None | | | |
| KR | 10-2012-0132096 | A | 05 December 2012 | US | 2012-0302289 | A1 | 29 November 2012 |
| | | | | US | 9256283 | B2 | 09 February 2016 |
| JP | 2020-173314 | A | 22 October 2020 | None | | | |

Form PCT/ISA/210 (patent family annex) (July 2022)

**EP 4 737 983 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11059224 A

- US 10298890 B